(19) Europäisches Patentamt
European Patent Office
Office européen des brevets

(11) **EP 4 768 862 A1**

(12) **EUROPEAN PATENT APPLICATION**

(43) Date of publication:
**01.07.2026 Bulletin 2026/27**

(21) Application number: **25221855.7**

(22) Date of filing: **09.12.2025**

(51) International Patent Classification (IPC):
**G01C 21/20** (2006.01)   **G01C 21/34** (2006.01)

(52) Cooperative Patent Classification (CPC):
**G01C 21/3469; G01C 21/20; G01C 21/3446; G01C 21/3492**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.12.2024 IN 202411103318**
**10.02.2025 US 202519049449**

(71) Applicant: **Honeywell International Inc.**
**Charlotte, NC 28202 (US)**

(72) Inventors:
• **RAJENDRAN, Ramkumar**
**Charlotte, 28202 (US)**
• **KHAN, Kalimulla**
**Charlotte, 28202 (US)**
• **JANAKIRAMAN, Kirupakar**
**Charlotte, 28202 (US)**
• **MANI, Krishna**
**Charlotte, 28202 (US)**
• **RAO, Nayyar Azam Khan**
**Charlotte, 28202 (US)**

(74) Representative: **Haseltine Lake Kempner LLP**
**Cheapside House**
**138 Cheapside**
**London EC2V 6BJ (GB)**

(54) **APPARATUSES, COMPUTER-IMPLEMENTED METHODS, AND COMPUTER PROGRAM PRODUCTS FOR GENERATING TRAVEL PATHWAYS TO REDUCE GREENHOUSE GAS IMPACT**

(57) Embodiments of the disclosure provide generative AI-based techniques for generating and adjusting travel pathways to reduce greenhouse gas (GHG) impact. In the context of a method, the method includes obtaining travel pathway data, the travel pathway data comprising environmental data in accordance with a travel pathway candidates for traversing between an origin and a destination; generating a travel pathway via a generative AI model and based on the travel pathway data and travel pathway candidates, wherein: a model reward function is based on a negative weighted summation of at least one greenhouse emission estimate and an estimated efficiency of the vehicle pursuant to a respective travel pathway candidate; and the travel pathway is configured to optimize GHG impact and efficiency of the vehicle as the vehicle traverses to the destination; and causing the vehicle to traverse from the origin to the destination in accordance with the travel pathway.

FIG. 1

EP 4 768 862 A1

**Description**

**CROSS REFERENCE TO RELATED APPLICATIONS**

This application claims the benefit of and priority to India Patent Application No. 202411103318, filed December 26, 2024, entitled "APPARATUSES, COMPUTER-IMPLEMENTED METHODS, AND COMPUTER PROGRAM PRODUCTS FOR GENERATING TRAVEL PATHWAYS TO REDUCE GREENHOUSE GAS IMPACT," the disclosure of which is incorporated herein by reference in its entirety.

**TECHNOLOGICAL FIELD**

Embodiments of the present disclosure are generally directed to generative artificial intelligence (AI) techniques for generating travel pathways configured to reduce the greenhouse gas (GHG) impact of a vehicle.

**BACKGROUND**

Vehicle-reliant industries may demonstrate significant impact on atmospheric GHG concentrations due to the burning of fossil fuels. For example, in an aerial context, the burning of jet fuel releases substantial amounts of carbon dioxide and other greenhouse gases into the atmosphere, which may contribute to global heating. The severity of GHG impact may be increased when emissions occur in regions with existing high levels of atmospheric GHG. Existing approaches to vehicle navigation planning may prioritize minimization of travel time and cost. As a result, route-based strategies for offsetting GHG impact may face challenges due to the cost-benefit imbalance of adopting navigation strategies that further prioritize reduction of GHG impact along the travel pathway.

Applicant has discovered various technical problems associated with generating travel pathways configured to reduce GHG impact. Through applied effort, ingenuity, and innovation, Applicant has solved many of these identified problems by developing the embodiments of the present disclosure, which are described in detail below.

**BRIEF SUMMARY**

In general, embodiments of the present disclosure herein provide for generative AI-based travel pathway generation and adjustment. For example, embodiments of the present disclosure are configured to predict GHG impact of a vehicle along a travel pathway and generate travel pathways and travel pathway adjustments configured to minimize the GHG impact of the vehicle while optimizing for the resource cost of operating the vehicle. In doing so, the methods, apparatuses, and computer program products described herein may reduce vehicle GHG impact while ensuring vehicle safety and minimizing reductions to vehicle efficiency and increases to operational costs.

The present methods, apparatuses, and computer program products may generate and modify travel pathways in substantially real-time based on estimates of GHG emission and predictions of emission effects in atmosphere. In doing so, the methods, apparatuses, and computer program products may provide dynamic adjustments to vehicle navigation such that GHG impact may be reduced. The various embodiments of the present disclosure may integrate reinforcement learning (RL) with generative AI models to generate optimal travel pathways and travel pathway adjustments in complex and dynamic environments. For example, the present methods, apparatuses, and computer program products may perform RL techniques (e.g., Q-learning, deep-Q networks, proximal policy, optimization, and/or the like) to continuously optimize generative AI models. In this manner, generative AI models may be continuously trained to generate travel pathways or travel pathway adjustments configured to reduce GHG emissions while optimizing for vehicle performance and mission cost.

The various embodiments of the disclosure may generate realistic conditional scenarios of travel pathway traversal. For example, the present methods, apparatuses, and computer program products may simulate weather conditions, atmospheric GHG conditions, photosynthetic activity, industrial activity, vehicle traffic conditions, and/or the like, that may be encountered along portions of a travel pathway. In this manner, the various embodiments of the disclosure may evaluate diverse environments and scenarios during training of generative AI models, which may enable more robust travel pathways that are optimized across all conditions or conditions most likely to occur during a time interval of travel. For example, the present methods, apparatuses, and computer program products may generate conditional scenarios comprising different weather patterns, vehicle traffic congestion levels, atmospheric GHG concentration patterns, and/or the like such that generative AI models may utilize diverse knowledge bases in training and live performance. In doing so, the model performance and extend the scope and depth of model knowledge bases and improve model accuracy. Other implementations for generative AI-based travel pathway control will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for travel pathway optimization is provided. The computer-implemented method is executable utilizing any of a myriad of computing device(s) and/or combinations of hardware, software, firmware. In some example embodiments an example computer-implemented method includes obtaining travel pathway data for a vehicle, the travel pathway data comprising environmental data in accordance with a plurality of travel pathway candidates for traversing between an origin and a destination; generating a travel pathway for the vehicle via a generative artificial intelligence (AI) model and based at least in part on the travel pathway data and the plurality of travel pathway candidates, wherein: a reward function of the generative AI model is based at least in part on a negative weighted summation of at least one greenhouse emission estimate and an estimated efficiency of the vehicle pursuant to a respective travel pathway candidate; and the travel pathway is configured to optimize GHG impact and efficiency of the vehicle as the vehicle traverses from the origin to the destination; and causing the vehicle to traverse from the origin to the destination in accordance with the travel pathway.

In some embodiments, the travel pathway data comprises a travel date; and the environmental data comprises historical environmental data and forecasted environmental data are associated with a season comprising the travel date. In some embodiments, the historical environmental data comprises historical photosynthetic activity pursuant to the season and in accordance with the plurality of travel pathway candidates. In some embodiments, the historical environmental data comprises historical GHG absorption pursuant to the season and in accordance with the plurality of travel pathway candidates. In some embodiments, the historical environmental data comprises historical GHG emission data pursuant to the season and in accordance with the plurality of travel pathway candidates. In some embodiments, the historical environmental data comprises historical GHG concentrations pursuant to the season and in accordance with the plurality of travel pathway candidates; and the forecasted environmental data comprises at least one GHG concentration prediction pursuant to the season and in accordance with the plurality of travel pathway candidates.

In some embodiments, the historical environmental data comprises historical weather conditions pursuant to the season and in accordance with the plurality of travel pathway candidates; and the forecasted environmental data comprises at least one weather condition forecast pursuant to the season and in accordance with the plurality of travel pathway candidates. In some embodiments, the historical environmental data comprises historical vehicle traffic pursuant to the season and in accordance with the plurality of travel pathway candidates; and the forecasted environmental data comprises at least one vehicle traffic prediction pursuant to the season and in accordance with the plurality of travel pathway candidates.

In some embodiments, the method further comprises obtaining additional travel pathway data in real-time as the vehicle traverses the travel pathway, wherein: the additional travel pathway data is associated with at least a portion of the travel pathway and a respective geographic region comprising the at least a portion of the travel pathway; and an atmospheric GHG concentration within the respective geographic region satisfies a predetermined threshold; generating, via the generative AI model, at least one travel pathway adjustment based at least in part on the additional travel pathway data; modifying the travel pathway based at least in part on the at least one travel pathway adjustment, wherein: the at least one travel pathway adjustment is configured to reduce a GHG impact of the vehicle pursuant to the respective geographic region; and causing the vehicle to move in accordance with the modified travel pathway.

In some embodiments, the at least one travel pathway adjustment is configured to reroute the vehicle around the respective geographic region. In some embodiments, the at least one travel pathway adjustment is configured to reduce a movement speed of the vehicle as the vehicle traverses the respective geographic region. In some embodiments, the at least one travel pathway adjustment is configured to adjust an altitude of the vehicle to avoid traversal of the vehicle through the respective geographic region. In some embodiments, the method further comprises rendering the at least one travel pathway adjustment on a display of a computing device aboard the vehicle.

In some embodiments, the method further comprises generating a plurality of candidate travel pathway adjustments based at least in part on the additional travel pathway data; predicting a respective value of a cumulative reward function for the plurality of candidate travel pathway adjustments; and determining, via at least one reinforcement learning operation, the at least one travel pathway adjustment based at least in part on the plurality of candidate travel pathway adjustments and the respective values of the cumulative reward function. In some embodiments, the cumulative reward function is based at least in part on a negative weighted summation of at least one greenhouse emission estimate and an estimated efficiency of the vehicle pursuant to a respective candidate travel pathway adjustment.

In some embodiments, the generative AI model is configured to map the travel pathway data to the plurality of travel pathway candidates based at least in part on a policy. In some embodiments, the method further comprises performing at least one reinforcement learning operation to generate an optimal iteration of the policy, the optimal iteration of the policy being configured to maximize the reward function of the generative AI model. In some embodiments, the method further comprises obtaining at least one measurement of GHG impact pursuant to navigation of the vehicle over the travel pathway; and retraining the generative AI model based at least in part on the at least one measurement of GHG impact. In some embodiments, the method further comprises generating a plurality of travel pathways for the vehicle via a generative AI model and based at least in part on the travel pathway data and the plurality of travel pathway candidates. In some embodiments, individual ones of the plurality of travel pathways are configured to optimize the GHG impact and efficiency of the vehicle in accordance with different time intervals. In some embodiments, the different time intervals include a plurality of seasonal intervals, wherein respective seasonal intervals are associated with different sets of environmental conditions including weather, atmospheric GHG concentration, photosynthetic activity, industrial activity, vehicle traffic, and/or the like.

In accordance with another aspect of the present disclosure, a computing apparatus for travel pathway optimization is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein. In some embodiments, the vehicle comprises the computing apparatus.

In accordance with another aspect of the present disclosure, a computer program product for travel pathway optimization is provided. The computer program product in some embodiments includes at least one non-transitory computer-readable storage medium having computer program code stored thereon. The computer program code in execution with at least one processor is configured for performing any one of the example computer-implemented methods described herein.

## BRIEF DESCRIPTION OF THE DRAWINGS

Having thus described the embodiments of the disclosure in general terms, reference now will be made to the accompanying drawings, which are not necessarily drawn to scale, and wherein:

FIG. 1 illustrates a block diagram of a network environment that may be specially configured within which embodiments of the present disclosure may operate.

FIG. 2 illustrates a block diagram of an example apparatus that may be specially configured in accordance with at least some example embodiments of the present disclosure.

FIG. 3 illustrates an example data architecture in accordance with at least some example embodiments of the present disclosure.

FIG. 4 illustrates an example model architecture for generative AI-based travel pathway generation in accordance with at least some example embodiments of the present disclosure.

FIG. 5 illustrates an example graphical user interface (GUI) that may be rendered on a computing device in accordance with at least some example embodiments of the present disclosure.

FIG. 6 shows an example model architecture for generative AI-based travel pathway adjustment in accordance with at least some example embodiments of the present disclosure;

FIG. 7 illustrates an example GUI that may be rendered on a computing device in accordance with at least some example embodiments of the present disclosure.

FIG. 8 illustrates an example GUI that may be rendered on a computing device in accordance with at least some example embodiments of the present disclosure.

FIG. 9 illustrates a flowchart depicting operations of an example process for performing generative AI-based travel pathway optimization in accordance with at least some example embodiments of the present disclosure.

## DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

Overview

Embodiments of the present disclosure provide a myriad of technical advantages in the technical field of generating travel pathways and adjusting travel pathways to reduce GHG impacts of a vehicle. Vehicle-related industries (e.g., aviation, automotives, locomotives, maritime, and/or the like) may demonstrate a significant impact on GHG emissions and planetary warming effects due to the burning of fossil fuels, which release carbon dioxide and other GHGs into the atmosphere. The GHG impact of a vehicle may be reduced by slowing vehicle speed or limiting travel to time periods of lower atmospheric GHG concentration. However, such approaches may reduce efficiency of the vehicle or be infeasible for practical implementation. For example, in an aerial context, restriction of air travel to a subset of time periods may be impractical, unenforceable, and reduce resource efficiency. As a result, the generation of environmentally sustainable travel pathways may face challenges in optimally balancing GHG impact reduction with constraints travel efficiency.

Embodiments of the present disclosure overcome the technical challenges of generating environmentally sustainable travel pathways and travel pathway adjustments for providing generative AI models configured to predict GHG impacts and generate optimal routes and route adjustments to minimize GHG impacts of vehicles. For example, a travel pathway may include a course for traversing from an origin to a destination such that emissions of the vehicle are minimized, subject to constrains of efficiency and safety. As another example, a travel pathway adjustment may dynamically adapt movement of the vehicle to optimize GHG impact in accordance with real-time conditions occurring as the vehicle traverses the travel pathway. The travel pathway outputs may prevent the vehicle from outputting emissions into areas of high atmospheric GHG concentration or reduce the level of such emissions. In doing so, the methods, apparatuses, and computer program products may prevent multifold negative impacts of introducing additional GHG emissions into geographical regions saturated with one or more atmospheric GHGs.

In various embodiments, present methods, apparatuses, and computer program products are configured to generate optimal travel pathways and travel pathway adjustments based at least in part on seasonally varied environmental conditions. Seasonal variations in temperature, floral activity, fauna activity, and/or the like may affect the rate of natural processes that produce and consume GHGs. For example, in warmer months and seasons, biological activity, such as plant growth and microbial activity, tends to increase, leading to more carbon dioxide ($CO_2$) being absorbed through photosynthesis. Conversely, during colder months, such processes slow down, potentially resulting in a net increase in $CO_2$ concentrations in the atmosphere. Further, atmospheric carbon dioxide concentration may fluctuate daily based on daylight hours and corresponding increases and decreases in photosynthesis. The present methods, apparatuses, and computer program products may generate travel pathways and travel pathway adjustments that account for seasonal variations in atmospheric GHG conditions. In this manner, the present techniques may increase the accuracy and specificity of sustainable travel pathway planning strategies.

In various embodiments, the present methods, apparatuses, and computer program products apply generative AI models and reinforcement learning techniques to generate optimal travel pathways and travel pathway adjustments. In doing so, the methods, apparatuses and computer program products may adapt in real-time to volatile variables (e.g., weather, air traffic) and provide more precise and efficient vehicle routing strategies. In various embodiments, the generative AI models are configured to forecast future condition scenarios based at least in part on historical data, which may enable generation of more accurate pre-traversal and para-traversal travel pathway strategies. For example, in an aerial context, the generative AI model may generate and simulate multiple flight scenarios to ensure the robustness of a travel pathway candidate in minimizing GHG impact pursuant to various potential conditions. The present methods, apparatuses, and computer program products may train the generative AI models via reinforcement learning and continued assessments of vehicle performance, environmental effects, and GHG data to increase predictive accuracy and further optimize travel pathways and adjustments for emissions reduction. By these techniques, the various embodiments may reduce GHG emissions of the vehicle along subsets of a travel pathway in which additional emission of GHGs may cause more severe heating impacts, such as regions in which atmospheric GHG concentrations are already excessive.

## Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Generative artificial intelligence (AI) model" refers to any algorithmic and/or machine learning model that generates text, images, videos, or other data based at least in part on one or more instructions provided in a natural language format. In some embodiments, a generative AI model includes one or more large language models (LLMs) including autoregressive language models, autoencoding language models, and/or the like. Additionally, or alternatively, in some embodiments, a generative AI model comprises an architecture based at least in part on generative adversarial networks (GANs), variational autoencoders (VAEs), autoregressive models, recurrent neural networks (RNNs), deep neural networks (DNNs), transformers, image generators, and/or the like.

"Greenhouse gas" (GHG) refers to any gas or vapor that contributes to the planetary warming by absorbing infrared radiation. For example, GHGs may include carbon dioxide, methane, nitrous oxide, hydrofluorocarbons (HFCs), perfluorocarbons (PFCs), sulfur hexafluoride, nitrogen trifluoride, ozone, and water vapor. The consumption (e.g., burning or other reaction) of fossil fuel by a vehicle may cause emission of one or more GHGs into the atmosphere.

"GHG impact" refers to effects of fuel consumption by a vehicle pursuant to planetary warming. For example, GHG impact may include an amount of one or more GHGs emitted by a vehicle. As another example, GHG impact may include a change to atmospheric GHG concentration that occurs due at least in part to emission of one or more GHGs by a vehicle.

"Travel pathway" refers to a data construct that indicates an actual or planned course of travel between two or more locations. For example, a travel pathway may indicate a planned course of travel for a vehicle between an origin point and a destination point. The travel pathway may be embodied any number of computer-readable storage media, such as one or more digital files. In some contexts, a travel pathway includes a track, route, flight path, flight plan, course, movement trajectory, bearing, float plan, and/or the like. As one example, a travel pathway may refer to a flight path that indicates a trajectory of air travel for an aerial vehicle between a first location and a second location. In some embodiments, the travel pathway includes a plurality of portions that define a course of travel between locations. In some embodiments, a travel pathway includes metadata including identifying information for one or more vehicles associated with the travel pathway, a target or expected travel time, a target resource cost of traversing the travel pathway, and/or the like. In various embodiments, techniques of the present disclosure modify a travel pathway to adjust one or more aspects of traversing a portion of the travel pathway. For example, a travel pathway adjustment may modify the speed, altitude, or course of travel of the vehicle to reduce the GHG impact of the vehicle pursuant to one or more portions of the travel pathway.

## Example Systems and Apparatuses of the Disclosure

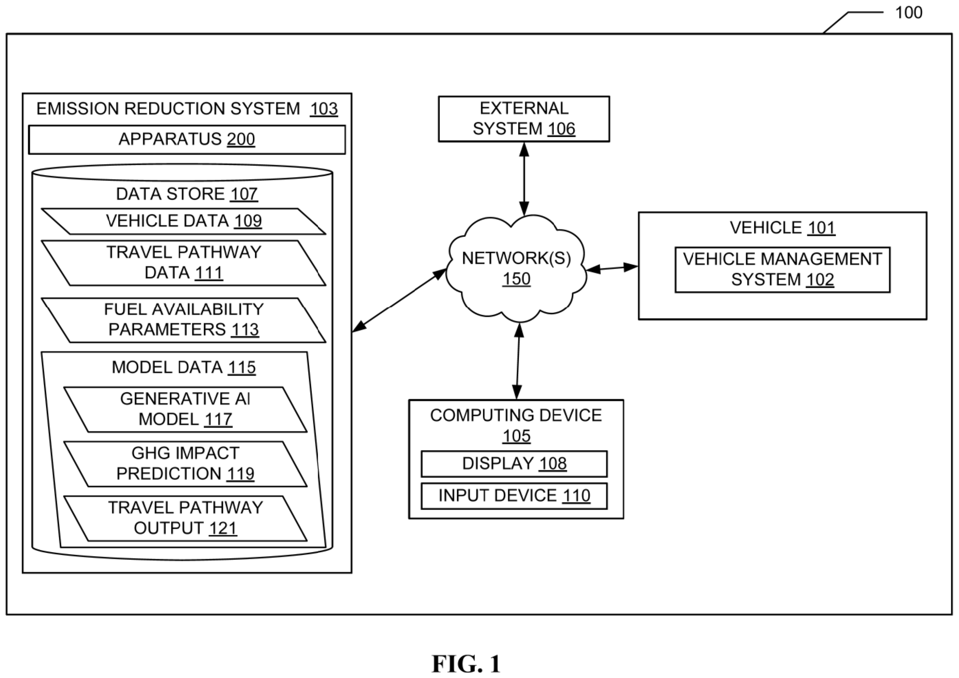

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, an emission reduction system 103, one or more computing devices 105, one or more external systems 106, and/or the like.

In various embodiments, the emission reduction system 103 includes an apparatus 200 configured to perform various functions and actions related to enacting techniques and processes described herein for generating travel pathway outputs 121 via one or more generative AI models 117. In some embodiments, a travel pathway output 121 includes a travel pathway for traversing between two or more locations, the travel pathway being optimized for GHG impact reduction, vehicle efficiency, and/or the like. Additionally, or alternatively, in some embodiments, a travel pathway output 121 includes a travel pathway adjustment configured to modify an existing travel pathway such that navigation of the vehicle 101 pursuant to one or more portions of the travel pathway may be optimized for GHG impact reduction.

In some embodiments, the emission reduction system 103 is external to the vehicle 101. For example, the emission reduction system 103 may include one or more computing resources, embodied in hardware, software, firmware, and/or the like, that are remote from the vehicle 101. Alternatively, in some embodiments, the vehicle 101 comprises the emission reduction system 103. For example, the emission reduction system 103 may include one or more computing resources, embodied in hardware, software, firmware, and/or the like, aboard the vehicle 101. In some embodiments, the emission reduction system 103 includes a first set of computing resources aboard the vehicle 101 and a second set of computing resources external to the vehicle 101. For example, the emission reduction system 103 may include a set of computing resources external to the vehicle 101 and configured to perform processes to train a generative AI model 117. In such context, the emission reduction system 103 may include a second set of computing resources configured to execute the trained generative AI model 117 to generate travel pathway outputs 121 before and/or during traversal of a travel pathway.

In various embodiments, the vehicle 101 includes a vehicle management system 102. In some embodiments, the vehicle management system 102 is configured to generate or obtain vehicle data 109 that is indicative of operation of the vehicle 101. Additionally, in some embodiments, the vehicle management system 102 is configured to control the vehicle 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes one or more vehicle recording systems configured to obtain and record one or more aspects of the vehicle or operation thereof. For example, the vehicle management system 102 may include a transponder, data uplink system, traffic collision avoidance system (TCAS), automatic dependent surveillance-broadcast (ADS-B), flight recorder, and/or the like. The vehicle data 109 obtained by the vehicle management system 102 may be accessible to the emission reduction system 103 and stored in one or more data stores 107. In some embodiments, the vehicle management system 102 includes or is in communication with one or more sensors of the vehicle 101. For example, the vehicle management system 102 may include or communicate with image sensors, altitude sensors, pressure sensors, temperature sensors, audio sensors, accelerometers, gyroscopes, magnetometers, inertial measurement units, and/or the like.

In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a global position system (GPS) module. In some embodiments, the vehicle management system 102 and/or apparatus 200 is/are configured to obtain and store vehicle data 109, travel pathway data 111, fuel availability parameters 113, model data 115, and/or the like, and store the data in one or more data stores 107. For example, the vehicle management system 102, apparatus 200, and/or the like may store travel pathway information, weather reports, vehicle traffic reports, atmospheric GHG concentration measurements, and/or the like at the data store 107 such that a generative AI model may draw upon the data as a knowledge base.

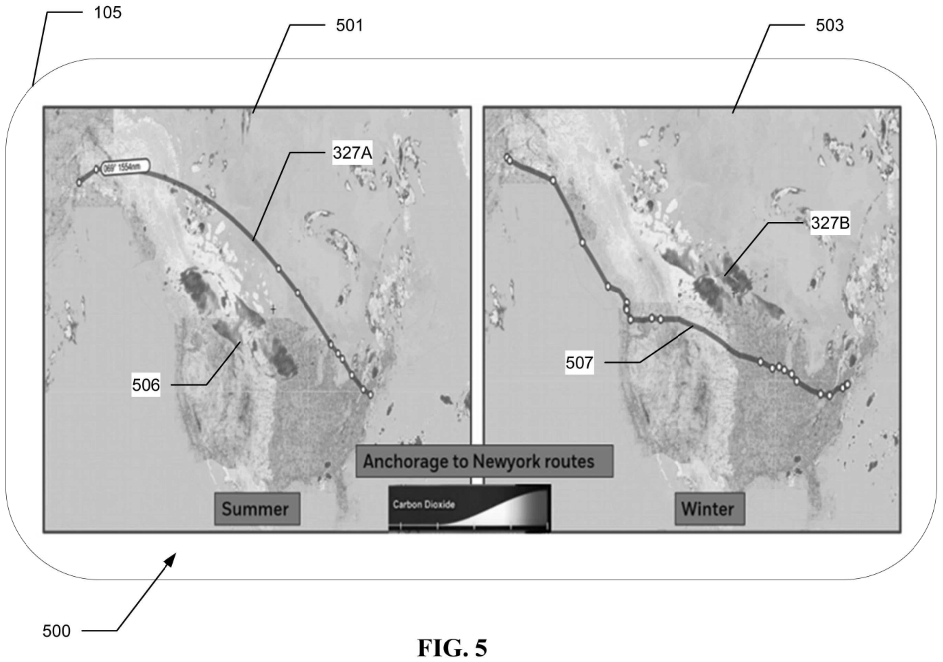

In some embodiments, the computing device 105 is associated with a vehicle operator, a vehicle owner, and/or the like. For example, the computing device 105 may be associated with a vehicle owner responsible for registering a travel pathway with a vehicle authority in advance of the vehicle traversing a travel pathway. As another example, the computing device 105 may be associated with a vehicle operator responsible for navigating the vehicle 101 along the travel pathway and enacting navigation strategies to minimize GHG impact of the vehicle 101 along one or more portions of the travel pathway. In various embodiments, the computing device 105 includes one or more displays 108. In some embodiments, the display 108 includes a CRT (cathode ray tube), LCD (liquid crystal display) monitor, LED (light-emitting diode) monitor, and/or the like, for displaying information/data to an operator or owner of the vehicle 101. In various embodiments, graphical user interfaces (GUIs) and visual representations related to travel pathways are rendered on the display 108. For example, the emission reduction system 103 may cause rendering of GUIs 500, 700, and 800 (as shown in FIGS. 5, 7, and 8, respectively, and described herein) on the display 108.

In some embodiments, the computing device 105 includes one or more input devices 110 configured to receive user inputs. For example, the input device 110 may receive user selections for defining travel pathway data 111, vehicle data 109, fuel availability parameters 113, and/or the like. As another example, the input device 110 may receive user selections for approving implementation of a travel pathway or travel pathway adjustment. The input device 110 may include any number of devices that enable HMI between a vehicle operator, the vehicle management system 102, the apparatus 200, and/or the like. In some embodiments, the input device 110 includes one or more buttons, cursor devices, joysticks, touch screens, including three-dimensional or pressure-based touch screens, camera, finger-print scanners, accelerometer, retinal scanner, gyroscope, magnetometer, or other input devices. For example, the input device 110 may include a touchscreen by which a vehicle operator may provide user inputs for requesting travel pathway outputs 121, GHG impact predictions 119, and/or the like, from the apparatus 200. In some embodiments, the input device 110 includes one or more vehicle controls (e.g., joysticks, thumbsticks, yokes, steering wheels, accelerator control, thrust control, brake control, and/or the like) that enable an operator to control and navigate the vehicle 101 in accordance with travel pathway outputs 121.

In some embodiments, the external system 106 includes any number of services, platforms, and/or the like that provide data to the emission reduction system 103, vehicle 101, and/or the like. In such contexts, the provided data may be utilized as input to generative AI-based processes for predicting GHG impacts and generating travel pathway outputs configured to minimize GHG impact of the vehicle 101. In some embodiments, the apparatus 200 is configured to receive vehicle data 109, travel pathway data 111, fuel availability parameters 113, model data 115, and/or the like, from one or more external systems 106 (e.g., weather reporting services, vehicle traffic services, vehicle alert services, maintenance services, other vehicles, and/or the like). In some embodiments, external systems 106 include weather forecasting or reporting services, vehicle traffic monitoring services, environmental monitoring services (e.g., atmospheric quality monitoring platforms, systems, and/or the like), and/or the like. For example, the external system 106 may include a weather service configured to provision historical and real-time weather conditions, wind patterns, and/or the like to the apparatus 200, vehicle management system 102, and/or the like. As another example, the external system 106 may include an environmental monitoring service configured to provision historical and current atmospheric GHG concentrations to the apparatus 200. As another example, the external system 106 may include a vehicle mission scheduling system configured to provision travel pathway data 111 to the apparatus 200. In another example, the external system 106 may be associated with a territorial authority such that the external system 106 may provision regulatory requirements, territory restrictions, and/or the like to the apparatus 200. In another example, the external system 106 may include an ecological monitoring service configured to track and report plant activity, vegetation density, livestock emissions, and other biological effectors of atmospheric GHG.

In various embodiments, the emission reduction system 103 includes one or more data stores 107. The various data in the data store 107 may be accessible to one or more of the apparatus 200, the vehicle management system 102, the computing device 105, and/or the like. The data store 107 may be representative of a plurality of data stores 107 as can be appreciated. The data stored in the data store 107, for example, is associated with the operation of the various applications, apparatuses, and/or functional entities described herein. The data stored in the data store 107 may include, for example, vehicle data 109, travel pathway data 111, fuel availability parameters 113, model data 115, and/or the like.

In various embodiments, vehicle data 109 includes any data associated with the operator or operation of the vehicle 101. In some embodiments, the vehicle data 109 includes readings from one or more sensors or systems aboard the vehicle 101. For example, the vehicle data 109 may include vehicle type, vehicle model, fuel capacity, fuel consumption, fuel tank specification, engine specification, emission rating, and/or the like. As another example, the vehicle data 109 may include temperatures, pressures, humidity levels, oxygen levels, carbon dioxide levels, and/or the like of the vehicle exterior or vehicle interior. As another example, the vehicle data 109 may include images, videos, audio recordings, and/or the like of the vehicle exterior or vehicle interior. As another example, the vehicle data 109 may include measurements of vehicle speed, acceleration, ascension, descension, pitch, turning rate, bank angle, and/or the like. In some embodiments, vehicle data 109 includes a metric of difference between a sensor measurement and a predetermined threshold, such as a target value, target range, limit, and/or the like. In some embodiments, vehicle data 109 includes a physical location of the vehicle 101, an altitude of the vehicle 101, a proximity of the vehicle 101 to one or more locations (e.g., destinations, territorial boundaries), and/or the like.

In some embodiments, travel pathway data 111 includes data associated with a course of travel for a vehicle 101. In some embodiments, travel pathway data 111 includes travel origins, destinations, routes between travel origins and destinations, total travel distances, and/or the like. For example, in an aerial context, the travel pathway data 111 may include a flight path between airports. In some embodiments, travel pathway data 111 and/or vehicle data 109 includes a phase or progression of the vehicle 101 along a travel pathway. For example, the travel pathway data 111 may include indications that the vehicle 101 is at stages of taxi, takeoff, ascent, cruising, pre-descent, descent, landing, arrival, and/or the like. In some embodiments, the travel pathway data 111 includes altitudes, routes, and/or the like at or along which the vehicle 101 will operate. For example, in an aerial context, the travel pathway data 111 may include a respective cruising altitude of the vehicle for a plurality of portions of the travel pathway.

In some embodiments, the travel pathway data 111 includes data associated with one or more environments through which the vehicle 101 may traverse in accordance with a travel pathway. For example, the travel pathway data 111 may include historical, current, or forecasted weather conditions, wind patterns, and/or the like, in accordance with one or more portions of the travel pathway. As another example the travel pathway data 111 may include historical, current, and/or forecasted GHG concentration levels pursuant to a plurality of portions of the travel pathway. In some embodiments, the travel pathway data 111 includes historical GHG emission levels, GHG impacts, and/or the like of the vehicle 101. For example, the travel pathway data 111 may include historical GHG emission levels and impacts of the vehicle 101 pursuant to a travel pathway or aspect thereof, such as a vehicle speed, altitude, direction, and/or the like.

In some embodiments, fuel availability parameters 113 include data associated with fossil fuels, reduced-emission fuels, and/or the like, that may be consumed by the vehicle 101. In some embodiments, fuel availability parameters 113 includes respective costs of fossil fuels, reduced-emissions fuels, and/or the like. The cost may be a global, regional, or location-specific cost. For example, the cost may be associated with an origin or destination of the vehicle 101, such as an airport. In some embodiments, fuel availability parameters 113 include respective volumes of fossil fuels, reduced-emissions fuels, and/or the like, that may be obtained at a location. In some embodiments, fuel availability parameters 113 include respective emission factors of fossil fuels, reduced-emission fuels, and/or the like. An emission factor may indicate a quantity of GHG emitted per unit of the fuel consumed. For example, an emission factor may indicate a mass of carbon dioxide emitted per liter of fuel burned.

In some embodiments, model data 115 includes data that defines one or more generative AI models 117. For example, the model data 115 may include data that defines autoregressive language models, autoencoding language models, GANs, VAEs, autoregressive models, RNNs, DNNs, transformers, image generators, and/or the like. In some embodiments, the model data 115 includes data for training a generative AI model to perform a task. For example, the model data 115 may include one or more knowledge bases comprising weather documentation, vehicle documentation, greenhouse data, travel pathway documentation, and/or the like by which a generative AI model 117 may be trained to generate GHG impact predictions 119, travel pathway outputs 121, and/or the like. The knowledge bases of the generative AI models 117 may comprise current and historical vehicle data 109, travel pathway data 111, fuel availability parameters 113, GHG impact predictions 119, measured GHG impacts, travel pathway outputs 121, and/or the like. In some embodiments, the model data 115 includes thresholds or other criteria by which performance and stability of the generative AI model 117 may be evaluated. For example, the model data 115 may include thresholds for model prediction accuracy, precision, fitting, and/or the like. In various embodiments, the model data 115 includes adjustable model settings or parameters.

In some embodiments, model data 115 includes GHG impact predictions 119, travel pathway outputs 121, and/or the like, which may be generated by one or more generative AI models 117. In various embodiments, a respective GHG impact prediction 119 comprises an estimated emission of one or more GHGs by a vehicle 101 as the vehicle 101 traverses one or more portions of a travel pathway. For example, a GHG impact prediction 119 may include an estimated amount of carbon dioxide emitted by the vehicle 101 as the vehicle 101 traverses a portion of a travel pathway and in accordance with a speed, altitude, acceleration, directionality, existing atmospheric GHG concentration, and/or the like. Additionally, or alternatively, in some embodiments, the GHG impact prediction 119 includes an estimated change to atmospheric concentration of one or more GHGs in a geographic region as the vehicle 101 traverses one or more portions of the travel pathway. For example, the GHG impact prediction 119 may include an estimated increase to atmospheric concentration of carbon dioxide in a region due to the vehicle 101 combusting fuel and outputting one or more GHGs while traversing through the region.

In some embodiments, the travel pathway output 121 includes one or more actions that may be implemented to control navigation of the vehicle 101 between two or more locations (e.g., an origin and one or more destinations). In some embodiments, a travel pathway output 121 comprises a travel pathway that may be provided to a vehicle owner, vehicle operator, and/or the like prior to egress of the vehicle 101. For example, in an aerial context, a travel pathway output 121 may include a pre-travel flight plan for an aerial vehicle. Alternatively, or additionally, in some embodiments, a travel pathway output 121 comprises one or more travel pathway adjustments that are configured to adjust navigation of the vehicle 101 mid-traversal of the travel pathway. For example, a travel pathway output 121 may include an increase or decrease to vehicle altitude pursuant to one or more portions of a travel pathway. In this manner, the travel pathway may be modified to instruct adjusting the altitude of the vehicle 101 such that areas of high atmospheric GHG concentration may be avoided. As another example, a travel pathway output 121 may include an increase or decrease to vehicle speed. As another example, a travel pathway output 121 may include an adjusted course of travel through or around one or more portions of a travel pathway, the course adjustments configured to prevent navigation of the vehicle 101 into a region with high concentrations of atmospheric GHG (e.g., within which GHG impact of the vehicle 101 may be more severe).

In some embodiments, a travel pathway output 121 is associated with one or multiple portions of the travel pathway and may include multiple altitudes, speeds, and/or the like, pursuant to respective subsets of the travel pathway. In some embodiments, a travel pathway output 121 includes metadata including a timestamp at which to enact a travel pathway adjustment, a location at which to enact a travel pathway adjustment, a time of year associated with the travel pathway (e.g., season, month, day, time of day, or other period), and/or the like. In some embodiments, the metadata includes a GHG impact prediction 119 (e.g., net benefit of implementing the travel pathway output121), an estimated resource cost of performing the generated or modified travel pathway (e.g., fuel costs, amount of fuel consumed, and/or the like), an estimated vehicle efficiency impact of implementing the travel pathway or travel pathway adjustment, and/or the like.

In some embodiments, the generative AI model 117 is configured to generate a travel pathway output 121 comprising a travel pathway and/or travel pathway adjustment configured to optimize GHG impact of the vehicle 101 pursuant to one or more geographical areas. In this manner, the apparatus 200 may ensure optimal pre-traversal or intra-traversal navigation decisions that account for both environmental and resource constraints. In some embodiments, the generative AI model 117 is trained to generate an optimal travel pathway or travel pathway adjustment based at least in part on current and historical weather conditions, vehicle traffic data, GHG emissions and atmospheric concentrations, vegetation activity, vehicle fuel efficiencies, seasonal or other temporal factors, and/or the like. In various embodiments, the generative AI model 117 is configured to perform predictive GHG impact modeling including forecasting the GHG impact of different travel pathways or travel pathway adjustments. For example, in aerial context, the generative AI model 117 may predict the respective GHG impact of different travel pathways or travel pathway adjustments based at least in part on weather conditions, traffic congestion, environmental sensitivity (e.g., volatility or resistivity to GHG concentration change, environmental regulations for maximum GHG emission or concentration, and/or the like), current GHG concentration, plant activity, and/or the like.

In some embodiments, the generative AI model 117 is configured to predict a respective GHG impact over the travel pathway pursuant to a plurality of travel pathway adjustment candidates. The GHG impact may include total emissions, forecasted changes to atmospheric GHG concentration, and/or the like. In some embodiments, the generative AI model 117 is configured to determine a final proposed travel pathway adjustment based at least in part on one of the plurality of travel pathway adjustment candidates that is associated with a minimum predicted GHG impact.

In some embodiments, the generative AI model 117 is configured to generate condition scenarios such that GHG impact predictions may be generated in accordance with various scenarios of travel pathway traversal. The condition scenarios may include different weather conditions, vehicle traffic patterns, atmospheric GHG concentration levels, plant activity, and/or the like. In some embodiments, the generative AI model 117 is configured to predict, in accordance with a respective travel pathway candidate (or travel pathway adjustment candidate), a set of GHG impact permutations pursuant to a plurality of condition scenarios along the travel pathway. In some embodiments, the generative AI model 117 is configured to determine, as the final proposed travel pathway (or travel pathway adjustment) as one of the plurality of travel pathway adjustment candidates that is associated with a minimal set of GHG impact permutations. For example, in an aerial context, the generative AI model 117 may generate multiple flight scenarios and simulate the optimal travel pathway that minimizes the GHG emissions of the vehicle 101 across all possible conditions, or a subset of conditions that are most likely to occur in accordance with the date of the travel pathway traversal.

In some embodiments, the generative AI model 117 is configured to continuously analyze real-time travel pathway data and environmental factors as the vehicle 101 traverses the travel pathway. In this manner, the apparatus 200 may update generate travel pathway adjustments on a dynamic basis such that the travel pathway may be optimized as conditions change along the portions of the travel pathway. For example, the generative AI model 117 may predict one or more approaching travel pathway portions that embody emission hotspots or areas of high environmental sensitivity (e.g., regions with strict emission regulations) based on at least in part on the travel pathway and real-time environmental data associated therewith. The generative AI model 117 may generate one or more travel pathway adjustments configured to avoid the hotspot GHG areas or reduce emissions while traversing through such areas.

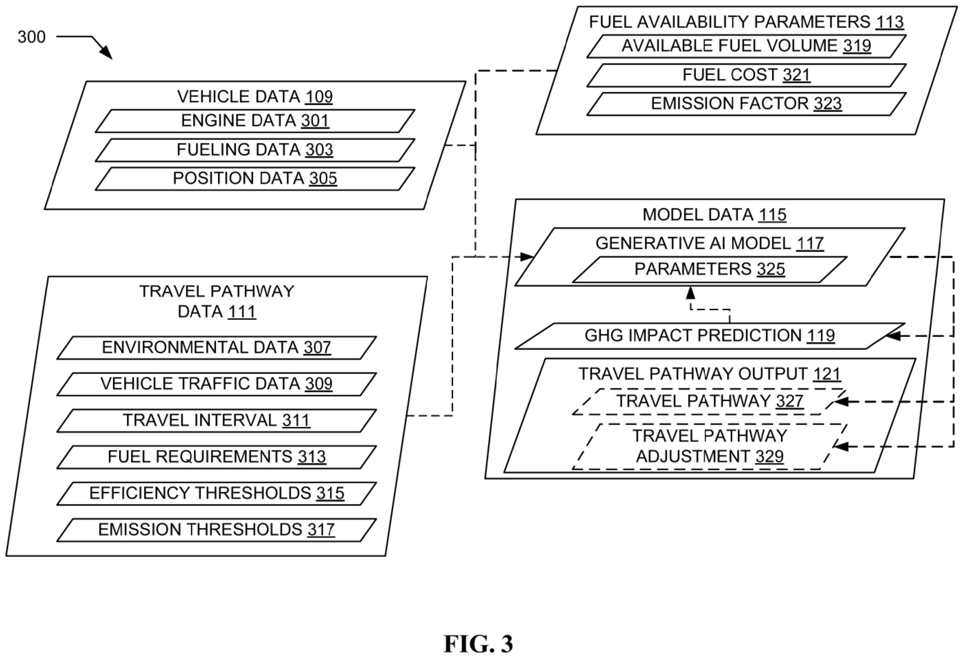

Additional example aspects of the vehicle data 109, travel pathway data 111, fuel availability parameters 113, and model data 115 are shown in the data architecture 300 depicted in FIG. 3 and described herein.

In various embodiments, the apparatus 200 is configured to instruct a generative AI model 117 to generate GHG impact predictions 119, travel pathway outputs 121, and/or the like. For example, the apparatus 200 may generate a GHG impact prediction 119 based at least in part on a condition scenario defined by vehicle data 109, travel pathway data 111, and/or the like. The apparatus 200 may generate a travel pathway output 121 based at least in part on the GHG impact prediction 119 and in accordance with the conditional scenario, where the travel pathway output 121 is configured to reduce or minimize the predicted GHG impact of the vehicle 101.

In some embodiments, the apparatus 200 is configured to obtain vehicle data 109, travel pathway data 111, fuel availability parameters 113, model data 115, and/or the like, from vehicles 101, computing devices 105, external systems 106, other emission reduction systems, and/or the like. For example, the apparatus 200 may receive a travel pathway from a vehicle management system 102. As another example, the apparatus 200 may receive from a weather monitoring service and/or emissions tracking service respective environmental data associated with one or more portions of a travel pathway. As another example the apparatus 200 may receive from an ecological service reports of vegetation density and activity along one or more portions of a travel pathway. In various embodiments, the apparatus 200 is configured to obtain such data in substantially real-time as the vehicle 101 traverses the travel pathway.

In some embodiments, the apparatus 200 is configured to obtain measurements of actual GHG impact as the vehicle 101 traverses a portion of a travel pathway or following traversal of the portion. For example, the apparatus 200 may obtain one or more measurements of GHG impact pursuant to navigation of the vehicle 101 over one or more portions of the travel pathway (e.g., the navigation occurring in accordance with one or more travel pathway outputs 121). In some embodiments, the apparatus 200 is configured to train and update the generative AI model 117 base at least in part on the measurements of actual GHG impact. Further, the apparatus 200 may continuously train and update the generative AI model 117 based at least in part on real-time updates of environmental data 307 (FIG. 3), and/or the like.

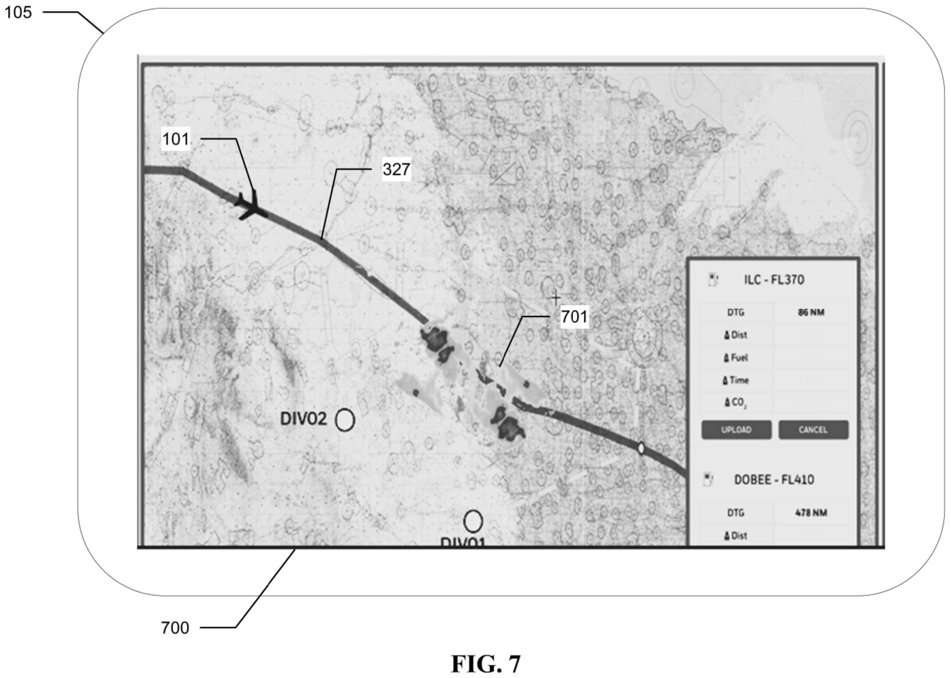

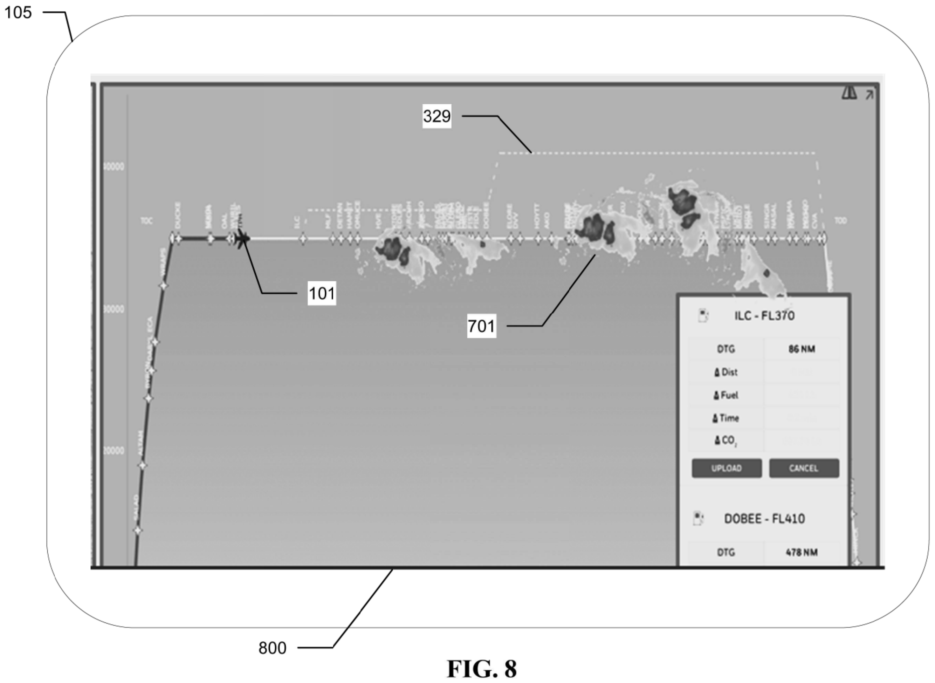

In various embodiments, the apparatus 200 is configured to control navigation of the vehicle in accordance with one or more travel pathway outputs 121. For example, the apparatus 200 may provision a travel pathway output 121 to a computing device 105 associated with an operator of the vehicle 101 to cause the operator to control the vehicle 101 in accordance with a course of navigation indicated by an AI-generated travel pathway. The travel pathway may be rendered on a display 108 of the computing device 105, such as in the form of a GUI (see, for example, GUI 500 shown in FIG. 5). As another example, the apparatus 200 may directly control navigation of the vehicle 101 in accordance with the travel pathway via communication with the vehicle management system 102. In another example, the apparatus 200 may provision to a vehicle operator a travel pathway adjustment, or a travel pathway modified based thereon. The travel pathway adjustment may be rendered on a display 108 such that a vehicle operator may access, view, adjust, and/or approve the travel pathway adjustment or generated travel pathway (see, for example, GUIs 700, 800 shown in FIGS. 7 and 8, respectively). In another example, the apparatus 200 may communicate with the vehicle management system 102 to control navigation of the vehicle in accordance with the travel pathway modification (e.g., adjusting vehicle course, altitude, speed, and/or the like).

In some embodiments, the apparatus 200 is configured to determine a location of the vehicle 101 in accordance with a travel pathway or portions of the travel pathway. For example, the apparatus 200 may obtain vehicle data 109 comprising a current geographical location, altitude, speed, and/or the like of the vehicle 101. The apparatus 200 may determine whether the vehicle 101 has traversed or is within a threshold range of traversing one of a plurality of portions of the travel pathway (e.g., a positive determination causing the apparatus 200 to initiate performance of a travel pathway adjustment pursuant to minimizing GHG impact of the vehicle 101 along the portion). In some embodiments, the apparatus 200 is configured to monitor for changes to vehicle data 109, travel pathway data 111 (e.g., including environmental data 307, see FIG. 3), fuel availability parameters 113, and/or the like. For example, the apparatus 200 may obtain current environmental data associated with a portion of a travel pathway yet to be traversed by a vehicle 101. The current environmental data may include a change to atmospheric GHG concentration, weather, temperature, vehicle traffic, and/or the like. In some embodiments, the apparatus 200 causes the generative AI model 117 to generate a travel pathway adjustment or a new travel pathway based at least in part on the detected changes. The additional travel pathway output 121 may be configured to replace a previously generated travel pathway output 121. For example, the second travel pathway output 121 may include a second altitude, cruising speed, and/or the like to replace a first altitude, cruising speed, and/or the like. As another example, the second travel pathway output 121 may include a navigational reroute of the vehicle 101 around an area associated with high atmospheric GHG concentration.

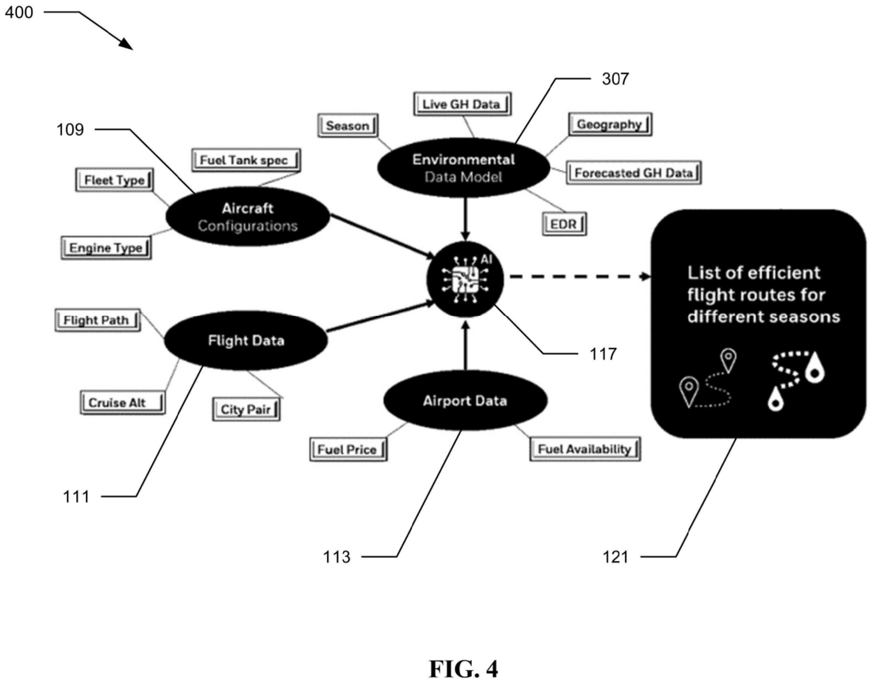

Additional example functionality and processes of the apparatus 200 are shown in the diagrams and processes depicted in FIGS. 4, 6, and 9 and described herein.

In some embodiments, the apparatus 200, vehicle management system 102, computing device 105, external system 106, and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200, the vehicle management system 102, the computing device 105, the external system 106, and/or the like. For example, the apparatus 200 may provision travel pathway outputs 121 and receive data via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

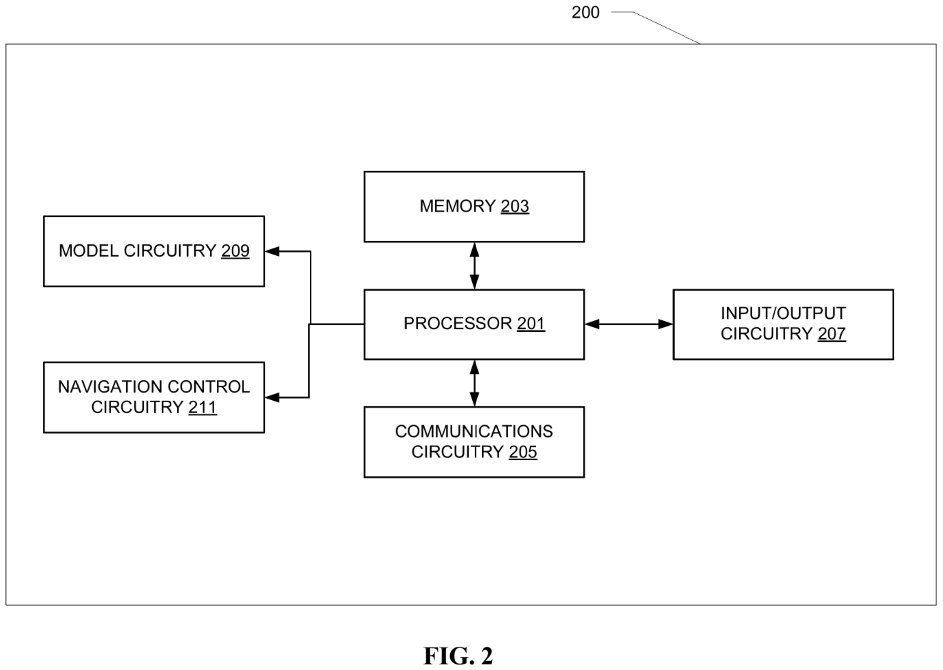

FIG. 2 illustrates a block diagram of an example apparatus 200 that may be specially configured in accordance with at least some example embodiments of the present disclosure. The apparatus 200 may carry out functionality and processes described herein to reduce GHG impact of a vehicle via generation of travel pathways and travel pathway adjustments by generative AI models. In some embodiments, the apparatus 200 includes a processor 201, memory 203, communications circuitry 205, input/output circuitry 207, model circuitry 209, and navigation control circuitry 211. In some embodiments, the apparatus 200 is configured, using one or more of the processor 201, memory 203, communications circuitry 205, input/output circuitry 207, model circuitry 209, and/or navigation control circuitry 211 to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., generating condition scenarios, predicting GHG emissions and impacts, generating travel pathway outputs, modifying travel pathways, controlling a vehicle in accordance with travel pathway outputs, and/or the like). In some embodiments, the memory 203 is embodied as a data store 107 as shown in FIG. 1 and described herein. In some embodiments, the memory 203 includes vehicle data 109, travel pathway data 111, fuel availability parameters 113, model data 115, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing generating travel pathway outputs 121. In some embodiments, the processor 201 includes hardware, software, firmware, and/or the like, that obtain vehicle data, travel pathway data, and/or the like, from vehicle management systems 102, external systems 106, computing devices 105, and/or the like. For example, the processor 201 may obtain environmental data from one or more weather services, vehicle sensors, device-uploaded documents, and/or the like. As another example, the processor 201 may obtain vehicle data, travel pathway data, and/or the like, from the vehicle management system 102, one or more external systems 106, and/or the like. In some embodiments, the processor 201 includes hardware, software, firmware, and/or the like, that receive model data from a computing environment external to the vehicle 101.

In some embodiments, the apparatus 200 includes input/output circuitry 207 that provides output to a user and, in some embodiments, receives an indication of a user input. In various embodiments, the user is an operator of a vehicle 101, where the operator may be aboard the vehicle 101. For example, in some contexts, the input/output circuitry 207 provides output to and receives input from one or more interfaces aboard the vehicle 101, such as input devices, displays, audio input/output devices, and/or the like. In some embodiments, the user is a maintainer of the vehicle 101, where the maintainer may be external from the vehicle 101. For example, in some contexts, the input/output circuitry 207 provides output to and receives input from a computing device 105 of a vehicle owner.

In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display, audio input/output device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, computing devices 105, and external systems 106 in communication with the apparatus 200. For example, the communications circuitry 205 may enable receipt of environmental data from external systems 106. As another example, the communications circuitry 205 may enable the provision of travel pathway outputs to the computing device 105, vehicle 101, and/or the like.

The model circuitry 209 includes hardware, software, firmware, and/or a combination thereof, that carry out processes for predicting GHG impacts and generating travel pathway outputs via generative AI models. For example, in some contexts, the model circuitry 209 includes hardware, software, firmware, and/or the like, that maintain and update a generative AI model 117. In some embodiments, the model circuitry 209 includes hardware, software, firmware, and/or the like, that generate, via the generative AI model 117, a travel pathway or travel pathway adjustment that may be implemented to minimize GHG emissions of a vehicle as the vehicle traverses from an origin to a destination. In some embodiments, the model circuitry 209 includes hardware, software, firmware, and/or the like, that generate condition scenarios based at least in part on permutations of weather conditions, air traffic conditions, atmospheric GHG concentration, and/or the like. In some embodiments, the model circuitry 209 includes hardware, software, firmware, and/or the like, that generate a respective GHG impact for a plurality of travel pathway candidates (or candidate travel pathway adjustments) and determine an optimal travel pathway (or travel pathway adjustment) that demonstrates the greatest reduction in GHG impact subject to constrains of travel efficiency, fuel availability, vehicle authority permissions, and/or the like.

In some embodiments, the model circuitry 209 includes hardware, software, firmware, and/or the like, that cause outputting of travel pathway outputs to vehicle management systems 102, computing devices 105, and/or the like. For example, the model circuitry 209 may cause rendering of GUIs comprising travel pathways or adjustments on a display of a computing device 105. As another example, the model circuitry 209 may cause rendering of a travel pathway or adjustment on a display of the vehicle management system 102 (e.g., enabling a vehicle operator to access and approve implementation). In some embodiments, the model circuitry 209 includes a separate processor, specially configured field programmable gate array (FPGA), and/or a specially programmed application specific integrated circuit (ASIC).

The navigation control circuitry 211 includes hardware, software, firmware, and/or a combination thereof, that carry out processes for controlling a vehicle 101 in accordance with travel pathway outputs 121. For example, the navigation control circuitry 211 may control vehicle engines, steering systems, braking systems, and/or the like, based at least in part on travel pathways, travel pathway adjustments, and/or the like generated via the model circuitry 209. In some embodiments, the navigation control circuitry 211 is configured to provision commands to the vehicle management system 102 to cause the vehicle management system 102 to control vehicle systems such that the vehicle moves in accordance with a travel pathway, travel pathway adjustment, and/or the like. In some embodiments, the navigation control circuitry 211 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, model circuitry 209, and/or navigation control circuitry 211 are combinable. Additionally, or alternatively, in some embodiments, one or more of the sets of circuitry perform some or all of the functionality described associated with another component. For example, in some embodiments, two or more of the sets of circuitry 201-211 are combined into a single module embodied in hardware, software, firmware, and/or a combination thereof. Similarly, in some embodiments, one or more of the sets of circuitry, for example the memory 203, communication circuitry 205, model circuitry 209, and/or navigation control circuitry 211 is/are combined with the processor 201, such that the processor 201 performs one or more of the operations described above with respect to each of these sets of circuitry 203-211.

## Example Data Architecture and Models of the Disclosure

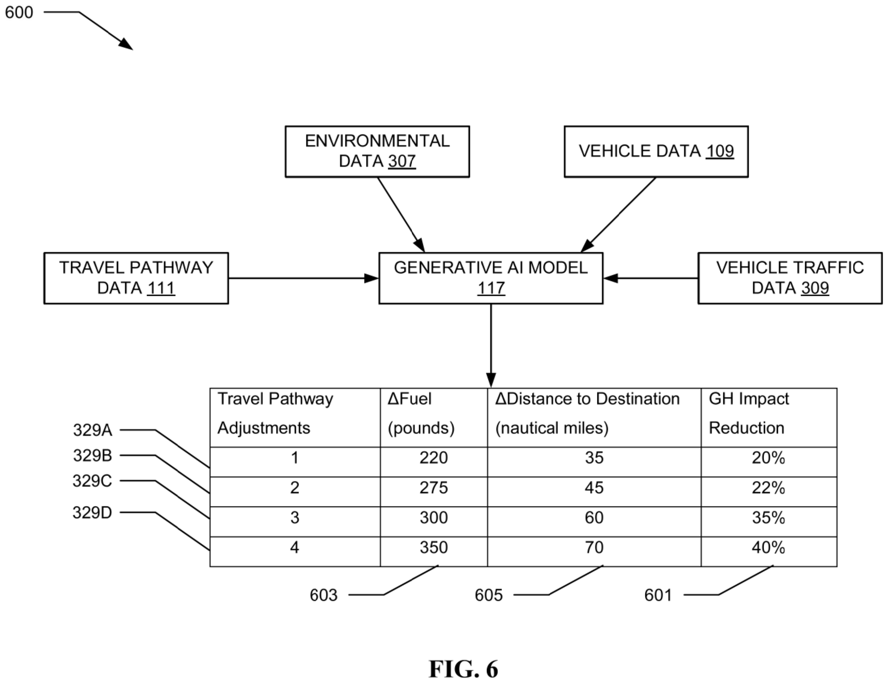

Having described example systems and apparatuses in accordance with embodiments of the present disclosure, example data architectures and models for processing data and generating outputs in accordance with the present disclosure will now be discussed. In some embodiments, the systems and/or apparatuses described herein maintain data environment(s) that enable the operations, processes, and/or the like in accordance with the data architectures described herein. For example, in some embodiments, the systems and/or apparatuses described herein function in accordance with the data architectures depicted and described herein with respect to FIG. 3 and are maintained via the apparatus 200. As another example, one or more emission reduction systems are configured in accordance with the diagrams FIGS. 4 and 6, respectively, and described herein.

FIG. 3. illustrates an example data architecture 300 in accordance with at least some example embodiments of the present disclosure. In some embodiments, vehicle data 109 includes vehicle heading, attitude, velocity, acceleration, pitch, travel phase (e.g., taxiing, ascending, cruising, descending, arriving, and/or the like), altitude, internal temperature, internal pressure, vibration level, respective component or system health, and/or the like. In some embodiments, the vehicle data 109 includes a make, model, version, type, or other classification of the vehicle 101.

In some embodiments, vehicle data 109 includes engine data 301 that describes one or more engine systems of the vehicle 101. In some embodiments, the engine data 301 includes engine type, version, configuration, age, health, and/or the like. In some embodiments, the engine data 301 indicates one or more fuel types, fuel mixtures, and/or the like, that may be used to power the engine. In some embodiments, vehicle data 109 includes fueling data 303 that describes one or more fueling requirements, configurations, capabilities, and/or the like of the vehicle 101. For example, the fueling data 303 may include respective fuel consumption rates in accordance with various fuel types, vehicle speeds, and/or the like. In some embodiments, the fueling data 303 includes fuel tank specifications including fuel capacity (e.g., volume available for storing fuel), storable fuel types or mixtures, and/or the like.

In some embodiments, the engine data 301, fueling data 303, and/or the like comprises respective emission factors pursuant to one or more fuel types, fuel mixtures, and/or the like. In some embodiments, the engine data 301, fueling data 303, and/or the like includes respective efficiency levels of the vehicle 101 in accordance with different fuel types, fuel mixtures, and/or the like. In some embodiments, vehicle data 109 includes position data 305 indicative of a geographical position of the vehicle 101. In some embodiments, the position data 305 includes a position of the vehicle 101 relative to one or more locations or other vehicles, and/or the like. For example, the vehicle data 109 may include one or more measures of distance between the vehicle 101 and portions of a travel pathway, a landing site, a geofence, a political boundary, a geographical feature, a point of interest, and/or the like.

In some embodiments, travel pathway data 111 includes one or more travel pathways of the vehicle 101 (e.g., historical, current, and future travel pathways). For example, travel pathway data 111 may include an origin (e.g., city, airport, and/or the like) and one or more destinations, such as a landing site (e.g., airport, helipad, ground station, and/or the like), a political boundary, a city, a geographical feature, and/or the like. In various embodiments, the travel pathway data 111 includes respective routes for traversing between an origin and a destination, including traversal trajectory, altitude, speed, and/or the like. In some embodiments, the travel pathway data 111 includes vehicle speeds, operating altitudes, and/or the like that may be met by the vehicle 101 during traversal of the travel pathway. For example, in an aerial context, the travel pathway data 111 may include a cruising speed, cruising altitude, and/or the like.

In some embodiments the travel pathway data 111 includes historical, current, and forecasted environmental data 307. In some embodiments, environmental data 307 includes weather data comprising one or more meteorological conditions present, forecasted, or previously documented along one or more portions of a travel pathway. For example, the environmental data 307 may include eddy dissipation rates (EDRs), wind patterns, wind intensities, wind shear or other turbulence-causing conditions, temperature, pressure, humidity, precipitation levels, precipitation types (e.g., rain, snow, sleet, fog, ice, and/or the like), dust or other debris conditions, and/or the like. In some embodiments, the environmental data 307 includes ecological data including respective photosynthetic activity, plant density, and/or the like, of various geographical areas. In this manner, the ecological data may indicate plant activities that impact atmospheric GHG concentration and related cycles that absorb or emit GHGs, such as carbon dioxide.

In various embodiments, the environmental data 307 includes greenhouse data pursuant to geographic regions associated with one or more portions of a travel pathway. For example, the environmental data 307 may include respective atmospheric GHG concentration levels of a plurality of geographic regions. In various embodiments, the environmental data 307 includes historical, current, and predicted GHG concentration levels. For example, the environmental data 307 may include historical, current, and forecasted carbon dioxide concentrations. In some embodiments, subsets of environmental data 307 are associated with different altitudes, durations, timestamps, and/or the like. For example, subsets of environmental data 307 may be associated with different time intervals, such as seasons, months, days, daylight hours, and/or the like. In this manner, variations in atmospheric GHG concentration due to air temperature, photosynthetic activity, vehicle traffic, and/or the like may be represented in the knowledge bases used by the present generative AI models 117.

In some embodiments, the travel pathway data 111 includes historical, current, and forecasted vehicle traffic data 309. In some embodiments, vehicle traffic data 309 includes vehicle traffic density along one or more portions of a travel pathway. In some embodiments, vehicle traffic data 309 includes estimated total emissions of vehicles passing through a travel pathway portion (or geographical region associated therewith) pursuant to an interval, such as 1 hour, 24 hours, 1 week, 1 month, or another suitable period. In some embodiments, travel pathway data 111 includes a travel interval 311 that indicates a time at which traversal of the travel pathway is scheduled to occur. For example, the travel interval 311 may indicate a season, month, day, time of day, daylight hours, and/or the like at which a vehicle 101 is scheduled to traverse the travel pathway. In this manner, GHG impact predictions 119, travel pathway outputs 121, and/or the like may be generated in accordance with condition scenarios specific to the travel interval 311. The travel interval 311 may increase the accuracy of simulated condition scenarios and GHG impact predictions 119, which may enable the generative AI model 117 to improve the optimization and specificity of travel pathway outputs 121.

In some embodiments, the travel pathway data 111 includes one or more fuel requirements 313 indicative of fuel needed to traverse a travel pathway, comply with fueling regulations or efficiency targets, and/or the like. In some embodiments, fuel requirements 313 include location-specific policies that indicate emissions regulations while traversing through a geographical region. In some embodiments, the travel pathway data includes one or more efficiency thresholds 315 that indicate one or more target engine efficiency levels for the vehicle 101 in accordance with one or more portions of the travel pathway, or the overall travel pathway. In this manner, travel pathway outputs 121 may be generated such that efficiency thresholds are satisfied while reducing GHG impact. In some embodiments, the travel pathway data 111 includes one or more emission thresholds 317 that indicate maximum emission levels, maximum atmospheric GHG concentrations, and/or the like, pursuant to one or more geographic regions and/or travel pathway portions. For example, an emission threshold 317 may include a maximum emission amount for traversing a travel pathway or portion thereof. As another example, an emission threshold 317 may include a maximum atmospheric GHG concentration level, or maximum change in the value thereof, for a portion of a travel pathway. In some embodiments, emission thresholds 317, efficiency thresholds 315, and/or the like may be configured by a vehicle operator, vehicle maintainer, vehicle owner, regulatory authority, and/or the like.

In some embodiments, fuel availability parameters 113 include available fuel volumes 319, fuel costs 321, and emission factors 323. In some embodiments, an available fuel volume 319 indicates a quantity of fuel that may be obtained from a fuel provider, such as a merchant, airport depot, storage facility, and/or the like. In some embodiments, a fuel cost 321 includes a historical, current, or forecasted price per unit of fuel. In various embodiments, an emission factor 323 indicates a historical or predicted amount of GHG emissions associated with consuming a unit of fuel. In some embodiments, respective emission factors 323 for a fuel type are associated with different condition scenarios including vehicle speed, travel pathway factor (e.g., direction, altitude, and/or the like), environmental conditions, and/or the like.

In various embodiments, the model data 115 includes generative AI models 117, GHG impact predictions 119, and travel pathway outputs 121. In some embodiments, a generative AI model 117 includes a plurality of parameters 325 by which performance of the generative AI model 117 may be configured. In some embodiments, the parameters 325 include reward functions, policies, constraints, transition functions, sampling temperature, nucleus sampling (e.g., top P), context window, maximum tokens, stop sequence, frequency penalty, present penalty, and/or the like. In some embodiments, the model data 115 includes knowledge bases comprising historical vehicle data 109, historical travel pathway data 111, historical GHG impact predictions 119, historical travel pathway outputs 121, and historical GHG impact measurements (e.g., actual GHG emissions and changes to atmospheric GHG concentration in accordance with activity of the vehicle 101). The generative AI model 117 may utilize the knowledge bases as an input to predictive processes and techniques described herein to estimate GHG impact and optimize vehicle navigation strategies.

In some embodiments, one or more generative AI models 117 are configured to generate GHG impact predictions 119 based at least in part on vehicle data 109, travel pathway data 111, travel pathway candidates, travel pathway adjustment candidates, and/or the like. In some embodiments, simulated values of vehicle data 109, travel pathway data 111 may embody one or more condition scenarios based upon which GHG impact predictions 119, travel pathway outputs 121, and/or the like may be generated. In various embodiments, the GHG impact prediction 119 includes an estimated GHG emission of the vehicle 101 along a travel pathway or portion of a travel pathway. Alternatively, or additionally, the GHG impact prediction 119 includes an estimated change to atmospheric GHG concentration in a geographic region comprising one or more portions of a travel pathway or the overall travel pathway, the change occurring in response to estimated emissions of the vehicle 101 during traversal. Alternatively, or additionally, in some embodiments, the GHG impact prediction 119 includes an indication of whether estimated emissions of the vehicle 101 are predicted to increase atmospheric GHG concentration in excess of one or more emission thresholds 317.

In some embodiments, the generative AI model 117 is configured to generate a travel pathway output 121 based at least in part on vehicle data 109, travel pathway data 111, fuel availability parameters 113, GHG impact predictions 119, and/or the like. The travel pathway output 121 may include one or more travel pathway adjustments 329 for modifying one or more portions of an existing travel pathway. Alternatively, or additionally, the travel pathway output 121 includes a travel pathway 327 that defines a course of travel between two or more locations. In some embodiments, the travel pathway output 121 includes an estimated total GHG emission of the vehicle 101 that may be achieved by performance of the travel pathway output 121. In some embodiments, the travel pathway output 121 includes an estimated change to atmospheric GHG concentration that may occur as a result of the vehicle 101 traversing a travel pathway configured in accordance with the travel pathway output 121. In some embodiments, the travel pathway output 121 includes an estimated efficiency of the vehicle 101 over the traversal of the travel pathway. In some embodiments, the travel pathway output 121 includes an indication of whether estimated efficiency satisfies one or more efficiency thresholds 315 (e.g., minimum efficiency, target efficiency range, and/or the like). In some embodiments, the travel pathway output 121 includes one or more resource cost estimates, or changes to existing cost estimates, pursuant to navigating the vehicle in accordance with the generated or modified travel pathway.

In some embodiments, the model data 115 includes measurements of GHG impact associated with the vehicle 101 traversing the travel pathway in accordance with travel pathway outputs 121. For example, the model data 115 may include measurements of actual vehicle emissions over the travel pathway, or portions thereof. Additionally, or alternatively, the model data 115 may include measurements of changes to atmospheric GHG concentration over portions of the travel pathway during or following traversal of the vehicle 101 along the portion.

FIG. 4 illustrates an example model architecture 400 for generative AI-based travel pathway generation in accordance with at least some example embodiments of the present disclosure. In some embodiments, the generative AI model 117 is configured to generate a travel pathway output 121 based at least in part on one or more inputs comprising vehicle data 109, travel pathway data 111 (e.g., including environmental data 307 associated with the travel pathway), fuel availability parameters 113, and/or the like. In various embodiments, the travel pathway output 121 includes a travel pathway, one or more travel pathway adjustments, and/or the like. In some embodiments, the emission reduction system 103 (e.g., embodied as one or more apparatuses 200) is configured to train the generative AI model 117 in accordance with a reinforcement learning (RL) workflow.

In some embodiments, the generative AI model 117 is configured to generate an optimal travel pathway such that a vehicle 101 may minimize contributions to excess atmospheric GHG concentrations while traversing between an origin and a destination. In various embodiments, the travel pathway is generated prior to departure of the vehicle 101. For example, the travel pathway may be generated and provisioned to a computing device 105 of a vehicle operator, vehicle owner, and/or the like. In some embodiments, the generative AI model is configured to generate an initial or current travel pathway planning state $S_t$ based at least in part on vehicle data 109, travel pathway data 111 (e.g., including environmental data 307), fuel availability parameters 113, and/or the like. For example, the generative AI model 117 may perform state initialization to generate the state S based at least in part on an origin, a destination, possible routes of travel between the origin and destination (e.g., flight corridors, and/or the like). In some embodiments, the state $S_t$ is generated further based at least in part on seasonal environmental data 307 including historical temperature variations, photosynthetic activity, global heating (GH) absorption, and emission patterns for a season in which the vehicle travel is schedule. In some embodiments, the state $S_t$ is generated further based at least in part on historical and forecasted GHG densities along potential routes for traversing between the origin and destination. In some embodiments, the state $S_t$ is generated based at least in part on current atmospheric conditions, vehicle traffic information, and/or like, that is associated with one or more geographic regions comprising the potential routes for traversing between the destination and origin.

In some embodiments, the generative AI model 117 is configured to generate an action space $A_t$ comprising a set of candidate travel pathways. The candidate travel pathways may be defined by varying routes, altitudes, speeds, and/or the like, that are configured to avoid geographical regions comprising high atmospheric GHG concentration, high GH levels, and/or the like (e.g., as compared to one or more current or historical baselines, thresholds, and/or the like). The respective candidate travel pathways may be configured to ensure safety and efficiency. The generative AI model 117 may generate or obtain a plurality of travel pathway candidates that meet respective thresholds for travel time, fuel efficiency, and/or the like. For example, a first travel pathway candidate may be associated with a direct path over a high-GHG density zone, and a faster speed as compared to second and third travel pathway candidates. The second travel pathway candidate may be associated with a longer route configured to traverse through lower GHG density zone. The third travel pathway candidate may be associated with a mid-altitude route configured to balance GHG emissions (e.g., representing GHG impact) and vehicle speed (e.g., representing vehicle efficiency). It will be understood and appreciated that any suitable number and variety of candidate travel pathways may be generated or obtained by the generative AI model 117.

In some embodiments, the generative AI model 117 is configured to generate an optimal policy $\pi$ for determining an optimal action $A_t$ based at least in part on the initial or current state $S_t$, the optimal policy may be referred to as $\pi(S)$. The optimal policy $\pi(S)$ may embody a policy that suggests the most optimal travel pathway candidate based at least in part on historical and forecasted GHG information (e.g., emissions, atmospheric GHG concentration, GH absorption, and/or the like). In such contexts, optimal may refer to minimization of GHG impact while satisfying vehicle efficiency thresholds, travel duration thresholds, safety thresholds, and/or the like. In various embodiments, the generative AI model 117 is configured to utilize the optimal policy to determine one of a plurality of travel pathway candidates that is associated with an optimal balance between vehicle speed, vehicle safety, and vehicle emissions. In doing so, the generative AI model 117 may determine a travel pathway candidate that is optimized for efficiency, safety, and environmental sustainability. In various embodiments, the generative AI model 117 is configured to perform one or more Q-learning operations, proximal policy optimization (PPO) operations, and/or the like to optimize the policy and the optimal travel pathway candidate based at least in part on historical and current seasonal travel pathway data 111 (e.g., including environmental data, vehicle traffic data, and/or the like).

In various embodiments, the generative AI model 117 is configured to generate a respective value of a Q-function $Q(S,A)$ for the travel pathway candidates. The Q-function may evaluate the expected reward $R(S_t,A_t)$ for travel pathway candidates based at least in part on seasonal GHG density, concentration, and/or the like, and travel conditions including vehicle traffic, weather conditions, photosynthetic activity, vehicle speed, vehicle altitude, vehicle route, and/or the like. In various embodiments, the reward function is based at least in part on a negative weighted summation of at least one greenhouse emission estimate and an estimated efficiency of the vehicle 101 pursuant to a respective travel pathway candidate. In various embodiments, the apparatus 200 defines the total reward $R(S_t,A_t)$ in accordance with Equation 1 as a negative weighted sum of GHG impact and fuel costs. In Equation 1, $\alpha$ may represent the weight for GHG emissions (e.g., the importance of reducing emissions), $\beta$ may represent the weight for fuel costs (e.g., the importance of cost efficiency and safety), and $\rho CO_2$ may represent carbon dioxide density (e.g., atmospheric GHG concentration). For example, the generative AI model 117 may compute a value of the reward $R(S_t,A_t)$ in accordance with the initialized state and a respective action (e.g., travel pathway candidate). In some embodiments, safety includes a respective probability of occurrence of one or more incident types including altitude burst, speed exceedance, turbulence, near-collision, and/or the like. The generative AI model 117 may optimize the Q-function over the travel pathway candidates. In this manner, the emission reduction system 103 may determine a travel pathway candidate (e.g., action $A_t$) that maximizes the reward while minimizing emissions of the vehicle 101.

$$R(S_t, A_t) = -\alpha * (\rho CO_2 + emissions) + \beta * (safety + efficiency) \text{ (Equation 1)}$$

In various embodiments, the optimal travel pathway outputted by the generative AI model 117 comprises a route of movement between an origin and a destination. In some embodiments, the travel pathway includes one or more altitudes at which portions of the travel pathway may be traversed to optimally balance the GHG impact and efficiency of the vehicle 101. In some embodiments, the travel pathway includes one or more vehicle speeds at which to traverse respective portions of the travel pathway. In various embodiments, the travel pathway is configured to optimize GHG impact and vehicle efficiency in accordance with a season or other time interval in which travel is scheduled to occur. The absorption and atmospheric concentration of GHGs may vary based on the season. The various knowledge bases utilized by the generative AI model 117 may include season-specific sets of historical, current, and forecasted data such that aspects of the travel scenario may be more accurately modeled. In this manner, the emission reduction system 103 may generate travel pathways and travel pathway adjustments based on a more accurate simulation of environmental and emissions conditions that will be present at the time of travel. For example, as shown in FIG. 5 and further described herein, the emission reduction system 103 may generate different travel pathways for traversing between a pair of cities based at least in part on a season in which travel is scheduled and the environmental conditions specific to the season, which result in different atmospheric GHG conditions and patterns.

In some embodiments, the travel pathway output 121 comprises a plurality of travel pathways, where respective travel pathways are optimized for different seasons. For example, the generative AI model 117 may generate a first travel pathway that is configured to minimize GHG impact and maximum efficiency of the vehicle when travel occurs in a summer season. The generative AI model 117 may generate a second travel pathway that is configured to minimize GHG impact and maximum efficiency of the vehicle when travel occurs in a winter season. The generative AI model 117 may further generate third and four travel pathways that are configured to minimize GHG impact and maximum efficiency of the vehicle when travel occurs in spring and autumnal seasons, respectively. In some embodiments, additional time intervals include dry seasons, rainy or other heavy-precipitation seasons, high-vehicle traffic intervals, low-vehicle traffic intervals, and/or the like. The prediction of optimal travel pathways for different time intervals may be based upon different knowledge bases, such as respective sets of historical, current, and forecasted environmental data that are associated with the time interval in which travel is scheduled to occur.

FIG. 5 shows an example GUI 500 that may be rendered on a computing device, such as a computing device 105. In various embodiments, the GUI 500 is rendered based at least in part on a travel pathway output 121 comprising a first travel pathway 327A and a second travel pathway 327B. The GUI 500 may include respective renderings of maps 501, 503 comprising a pair of locations associated with scheduled travel. For example, the travel event may be from Anchorage, Alaska to New York, New York. In a first scenario, the travel is scheduled to occur in a summer season, as show in the map 501. In a second scenario, as shown in the map 503, the travel is scheduled to occur in a winter season. In various embodiments, the generative AI model 117 generates the first travel pathway 327A and the second travel pathway 327B based at least in part on respective sets of historical, current, and forecasted data associated with the corresponding season. For example, the generative AI model 117 may generate the first travel pathway 327A based at least in part on historical, current, and predicted travel pathway data 111 associated with the summer season. The generative AI model 117 may generate the second travel pathway 327B based at least in part on historical, current, and predicted travel pathway data 111 associated with the winter season.

In various embodiments, the generative AI model 117 is configured to predict or obtain locations associated with high atmospheric GHG concentrations pursuant to the time interval in which the travel event is scheduled. In this manner, the generative AI model 117 may generate travel pathway outputs based on dynamic models of atmospheric GHG concentrations and migrations. As shown in the map 501, an atmospheric GHG concentration 506 may be located in a more southerly geographic region in the summer season. As shown in the map 503, an atmospheric GHG concentration 507 may be located in a more northerly geographic region in the winter season. In some embodiments, the travel pathway 527A is configured to avoid the geographic region comprising the atmospheric GHG concentration 506. For example, the travel pathway 527A may direct navigation of the vehicle 101 along a more northerly route in the summer to reduce the GHG impact of the vehicle 101. In some embodiments, the travel pathway 527B is configured to avoid the geographic region comprising the atmospheric GHG concentration 506. For example, the travel pathway 527B may direct navigation of the vehicle 101 along a more southerly route in the winter to reduce the GHG impact of the vehicle 101.

In various embodiments, the GUI 500 may be rendered on a computing device 105 of a vehicle owner, vehicle operator, and/or the like to enable access, review, and approval of the travel pathways 327A, 327B. In some embodiments, the travel pathways 327A, 327B are provisioned to a vehicle management system 102, which may cause the vehicle management system 102 to navigate the vehicle 101 along the travel pathway 327A or travel pathway 327B dependent upon whether the travel event occurs in the summer or winter season. In this manner, before a respective travel event, the emission reduction system 103 may generate an optimal route based at least in part on historical GHG data and seasonal GHG concentration forecasts. The optimal route may be adjusted dynamically based at least in part on the season and factors associated therewith, such as GHG concentration, vehicle traffic, weather conditions, atmospheric conditions, photosynthetic activity, and/or the like.

Referring now to FIG. 6, shown is an example model architecture 600 for generative AI-based travel pathway adjustment. In various embodiments, the emission reduction system 103 is configured to minimize GHG impact of the vehicle 101 by dynamically modifying the travel pathway during traversal based at least in part on real-time GHG data and seasonal variations. In some embodiments, the emission reduction system 103 generates simulations of environmental conditions, vehicle traffic conditions, and/or the like along the travel pathway. In some embodiments, via the generative AI model 117 and one or more reinforcement learning (RL) operations, the emission reduction system 103 dynamically adjusts the travel pathway during traversal to adapt to new GHG data and conditions such that GHG impact and efficiency of the vehicle 101 may be continuously optimized. In doing so, the emission reduction system 103 may ensure that vehicle traffic is distributed in a manner that minimizes GHG emissions in areas with high atmospheric GHG density and avoids seasonal emission peaks. In this manner, the sustainability and efficiency of vehicle navigation operations may be improved.

In some embodiments, the generative AI model 117 is configured to continuously update the state $S_t$ in response to additional travel pathway data 111, environmental data 307, vehicle data 109, and vehicle traffic data 309 obtained during traversal of the travel pathway. In some embodiments, the generative AI model 117 updates the state in accordance with Equation 2, in which $(x_t, y_t)$ represent the current location of the vehicle 101, $Alt_t$ represents the altitude of the vehicle 101, and $V_t$ represents current speed of the vehicle 101. Further, in Equation 2, $GH_t$ represents the current atmospheric concentrations of one or more GHG in a geographic region comprising one or more travel pathway portions, and $W_t$ represents current weather conditions. The GHG concentration may be generated or obtained by the emission reduction system 103 based at least in part on environmental data 307 including real-time data on GHG density along the travel pathway. The environmental data 307 may include weather conditions, such as current wind, temperature, EDR, and/or the like. In some embodiments, the state $S_t$ is generated further based at least in part on additional vehicle data 109 comprising current fuel consumption of the vehicle 101, current emissions of the vehicle 101, and/or the like.

$$S_t = \{(x_t, y_t), Alt_t, V_t, GH_t, W_t\} \qquad \text{(Equation 2)}$$

In various embodiments, the generative AI model 117 is configured to generate one or more action spaces $A_t$ that embody candidate travel pathway adjustments. In some embodiments, the candidate travel pathway adjustments include one or more changes to the course of the vehicle to avoid geographical regions associated with high atmospheric GHG concentration, weather disruptions, turbulence, and/or the like (e.g., rerouting actions). In some embodiments, the candidate travel pathway adjustments include one or more adjustments to the altitude of the vehicle 101 such that the vehicle 101 may traverse one or more portions of the travel pathway at an optimal altitude for minimizing emissions, improving fuel efficiency, and/or the like. In some embodiments, the candidate travel pathway adjustments include one or more adjustments to the speed of the vehicle 101 to minimize fuel consumption and, thereby, reduce vehicle emissions while maintaining safe operation. For example, a first travel pathway adjustment may include shifting a portion of the travel pathway 10 miles eastward to avoid a geographic region comprising a high atmospheric GHG concentration (e.g., based on the GHG concentration satisfying one or more predetermined thresholds). As another example, a second travel pathway adjustment may include increasing the altitude of the vehicle 101 to avoid higher emissions at lower altitudes. As another example, a third travel pathway adjustment may include decreasing the speed of the vehicle 101 to balance fuel efficiency with emissions.

In some embodiments, the generative AI model 117 generates the action space in accordance with Equation 3, in which $\Delta x$, $\Delta y$ represent changes in geographic direction (e.g., rerouting), $\Delta Alt$ represents a change in altitude, and $\Delta V$ represents a change in vehicle speed. In some embodiments, the generative AI model 117 is configured to predict a value of a reward function $R(S_t, A_t)$ based at least in part on a candidate travel pathway adjustment (e.g., $A_t$). The reward function of the generative AI model 117 may comprises a negative weighted summation of GHG impact and fuel consumption of the vehicle and a safety factor and vehicle efficiency along the travel pathway. In various embodiments, the generative AI model 117 generates the value of the reward function Rt in accordance with Equation 4. In Equation 4, $\alpha_1$ and $\alpha_2$ may represent respective weights for negative impacts of emission and fuel use. Further, $\beta_1$ and $\beta_2$ may represent respective weights for positive impacts of vehicle safety and vehicle efficiency. The carbon dioxide emissions of the vehicle 101 in the current state $S_t$ may be represented by $CO_2(S_t)$. The current fuel consumption of the vehicle 101 may be represented as *Fuelt*. The safety factor for avoiding high-risk weather or turbulence may be represented as *Safety*$(S_t)$. A measure of fuel efficiency based at least in part on the travel pathway, altitude, and weather conditions may be represented as *Eificiency* $(S_t)$.

$$A_t = \{\Delta x, \Delta y, \Delta Alt, \Delta V\} \qquad \text{(Equation 3)}$$

$$R(S_t, A_t) = -\alpha_1 * CO2(S_t) - \alpha_2 * Fuel_t + \beta_1 * Safety(S_t) + \beta_2 * Efficiency(S_t)$$
$$\text{(Equation 4)}$$

In some embodiments, the generative AI model 117 is configured to model the carbon dioxide emissions of the vehicle 101 in accordance with Equation 5, in which $c_1$ represents a proportional constant for $CO_2$ emissions per unit of fuel burned and $f(Alt_t)$ is a function configured to represent increased emissions at higher altitudes due to engine inefficiencies, atmospheric effects, and/or the like. In some embodiments, the generative AI model 117 is configured to model the fuel consumption of the vehicle 101 in accordance with Equation 6 as a function of vehicle speed, altitude, and weather conditions. In Equation 6, $c_2$ represents a constant for fuel consumption based on the speed of the vehicle 101, and a function $g(Alt_t, W_t)$ is configured to represent the effects of altitude and weather conditions on fuel efficiency.

$$CO2(S_t) = c_1 * Fuel(S_t) * (1 + f(Alt_t)) \qquad \text{(Equation 5)}$$

$$Fuel(S_t) = c_2 * V_t^{1.5} * g(Alt_t, W_t) \qquad \text{(Equation 6)}$$

In various embodiments, the generative AI model 117 generates respective GHG impact predictions 601 for a plurality of travel pathway adjustments 629A, 629B, 629C, 629D. A GHG impact prediction 601 may comprise a predicted reduction in the GHG impact of the vehicle 101 for a scenario in which the associated travel pathway adjustment is implemented (e.g., in comparison to a scenario in which the travel pathway is unmodified). For example, the generative AI model 117 may generate respective GHG impact predictions of 20%, 22%, 35%, and 40% for the travel pathway adjustments 629A, 629B, 629C, 629D. In some embodiments, the generative AI model 117 generates one or more efficiency impact predictions based at least in part on the travel pathway adjustment. In some embodiments, the efficiency impact predictions include fuel consumption predictions 603, distance predictions 605, and/or the like. In some embodiments, a fuel consumption prediction 603 comprises a predicted change to the amount of fuel consumed by the vehicle 101 as a result of implementing a travel pathway adjustment. In some embodiments, a distance prediction 605 comprises a predicted change to the total distance travel traversed by the vehicle 101 as a result of implementing a travel pathway adjustment. For example, the travel pathway adjustment 629D may be associated with a maximum impact reduction as out of the travel pathway adjustments 629A-D and a greatest increase to predicted fuel consumption and travel distance.

In various embodiments, the generative AI model 117 is configured to perform one or more RL operations to generate an optimal policy $\pi$ for determining one of the plurality of candidate travel pathway adjustments that best optimizes GHG impact and efficiency of the vehicle 101. In some embodiments, the policy $\pi$ is configured for determining an optimal action (e.g., travel pathway adjustment) to take in a respective state. For example, the generative AI model 117 may use the policy $\pi$ to determine a most optimal travel pathway adjustment pursuant to a current set of conditions. The policy $\pi$ may dynamically suggest rerouting, altitude changes, speed changes, and/or the like, based at least in part on live GHG concentration data, weather conditions, safety factors, and/or the like.

In some embodiments, the generative AI model 117 is configured to perform one or more Q-learning operations to generate a Q-value representing an expected cumulative reward for taking an action $At$ in a state $S_t$ and generating further travel pathway adjustments in accordance with a current optimal policy. For example, the generative AI model 117 may generate a respective cumulative reward value for a plurality of possible actions $A_t$ (e.g., candidate travel pathway adjustments) in accordance with all possible states $S_t$ (e.g., condition scenarios) or a subset of states that are most likely to occur. The emission reduction system 103, generative AI model 117, and/or the like may perform Deep Q-learning operations via a neural network, such as a deep-Q network (DQN). In some embodiment, the generative AI model 117 generates a Q-value in accordance with Equation 7, in which $Q(S_t,A_t)$ represents a Q-value for a state-action pair $(S_t,A_t)$. Further, $R(S_t,A_t)$ may represent an immediate reward for taking action $A_t$ in state $S_t$, $\gamma$ may represent a discount factor for future rewards (e.g., $0<\gamma<1$), $S_t+1$ may represent a subsequent state, and $A_t+1$ may represent a subsequent action selected by the generative AI model 117 in accordance with a policy $\pi(St+1)$.

$$Q(S_t, A_t) = R(S_t, A_t) + \gamma * \mathbb{E}[Q(S_{t+1}, A_{t+1})] \qquad \text{(Equation 7)}$$

In various embodiments, the generative AI model 117 performs one or more operations to determine a policy $\pi$ that maximizes the cumulative future reward and update the policy $\pi$ in accordance with subsequent states. In some embodiments, the generative AI model 117 performs RL operations including proximal policy optimization (PPO), deep-Q learning, and/or the like. For example, the generative AI model 117 may be configured to learn an action-value function $Q$ $(s_t, a_t)$ that estimates the expected future reward for taking action $a_t$ in state $s_t$. In some embodiments, the generative AI model 117 updates the Q-value function in accordance with Equation 7 In various embodiments, the generative AI model 117 derives the policy $\pi$ in accordance with Equation 8 by choosing the action the maximizes the Q-value.

$$\pi(s_t) = \arg \max_{a \, at \, t} Q\left(s_t, a_t\right) \qquad \text{(Equation 8)}$$

In some embodiments, the generative AI model 117 is configured to simulate diverse seasonal atmospheric GHG concentration patterns to augment the training data for the RL operations. For example, the generative AI model 117 may simulate various scenarios of GHG concentration, photosynthetic activity, temperature, weather, industrial activities, and/or the like. In some embodiments, the generative AI model 117 is configured to predict seasonal variations in atmospheric GHG concentration in accordance with Equation 9, where $GH_{t+1}$ represents a predicted concentration at a time t+1 and $f_{GenAI}$ is a generative AI function trained to predict future GHG concentration based at least in part on temperature ($T$), photosynthetic activity and/or other vegetation activity ($V$), and industrial activity ($I$).

$$\hat{G}H_{t+1} = f_{GenAI}(T_{t+1}, V_{t+1}, I_{t+1}) \qquad \text{(Equation 9)}$$

In various embodiments, as the vehicle 101 traverses the travel pathway, the generative AI model 117 is configured to continuously evaluate Q-values for various candidate travel pathway adjustments (e.g., reroutes, speed adjustments, altitude adjustments, and/or the like). In some embodiments, based at least in part on the Q-value, the generative AI model 117 determines a candidate travel pathway adjustment that maximizes the cumulative reward for sustainability and safety. In some embodiments, the emission reduction system 103 updates the policy $\pi(S_t)$ in real-time via one or more RL operations including deep Q-learning operations, PPO operations, and/or the like. In doing so, the generative AI model 117 may be trained via continuous learning and improvement operations. For example, the emission reduction system 103 may obtain real-time data of GHG emissions, weather conditions, vehicle status, and/or the like. The generative AI model 117 may determine an optimal travel pathway candidate based at least in part on a learned policy $\pi$. The emission reduction system 103 may modify the travel pathway based at least in part on the travel pathway adjustment and cause the vehicle 101 to move between locations in accordance with the modified travel pathway. The generative AI model 117 may generate an updated Q-value based at least in part on metrics configured to measure the effectiveness of the travel pathway modification, such as measured changes to atmospheric GHG concentration, vehicle emissions, vehicle efficiency, and/or the like. The generative AI model 117 may adjust the reward function, policy $\pi$ based at least in part on the Q-value. The generative AI model 117 may generate additional travel pathway adjustments based at least in part on the updated reward function, policy π, and additional obtained data. The emission reduction system 103 may iteratively generate and implement travel pathway adjustments, generate Q-values, and update the reward function and policy π for the duration of travel pathway traversal. As further shown in FIG. 6, the travel pathway adjustments may be provisioned to computing devices and rendered on displays thereof to enable a vehicle operator to access, view, and/or approve the travel pathway adjustment.

FIG. 7 shows an example GUI 700 that may be rendered on a computing device, such as a computing device 105. In some embodiments, the emission reduction system 103 causes rendering of the GUI 700 to enable a vehicle operator or other user to observe a travel pathway 327 and respective locations of one or more atmospheric GHG concentrations present in geographic regions comprising the travel pathway 327. For example, the emission reduction system 103 may generate a location of an atmospheric GHG concentration 701 based at least in part on travel pathway data comprising a travel pathway 327 and environmental data 307 comprising real-time GHG concentration data. As shown, the initial travel pathway 327 of the vehicle 101 may intersect the atmospheric GHG concentration 701. Traversal of the vehicle through the atmospheric GHG concentration 701 may result in significant impacts to atmospheric GHG density due to emissions of the vehicle 101. In various embodiments, the emission reduction system 103 performs functionality described herein to generate one or more travel pathway adjustments configured to reroute the vehicle 101 around the geographic region comprising the atmospheric concentration 701 to reduce GHG impact while minimizing reductions to vehicle efficiency. In some embodiments, the travel pathway adjustment includes rerouting a course of travel of the vehicle 101, adjusting an altitude of the vehicle 101, and/or the like, to avoid or minimize travel through the geographic region comprising the atmospheric GHG concentration 701.

FIG. 8 shows an example GUI 800 that may be rendered on a computing device, such as a computing device 105. In various embodiments, the GUI 800 includes a rendering of one or more travel pathway adjustments 329 configured to reduce GHG impact of the vehicle 101. In some embodiments, the travel pathway adjustment 329 includes a change to the altitude of the vehicle 101 such that the vehicle 101 avoids traversing through a region comprising the atmospheric GHG concentration 701. For example, in an aerial context, the rendered travel pathway adjustment 329 may indicate an increase or a decrease to the altitude of an aerial vehicle such that the vehicle passes above or below the area comprising the atmospheric GHG concentration 701. In doing so, the vehicle 101 may avoid contributing additional emissions to the atmospheric GHG concentration 701. In this manner, the GHG impact of the vehicle 101 may be reduced.

## Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

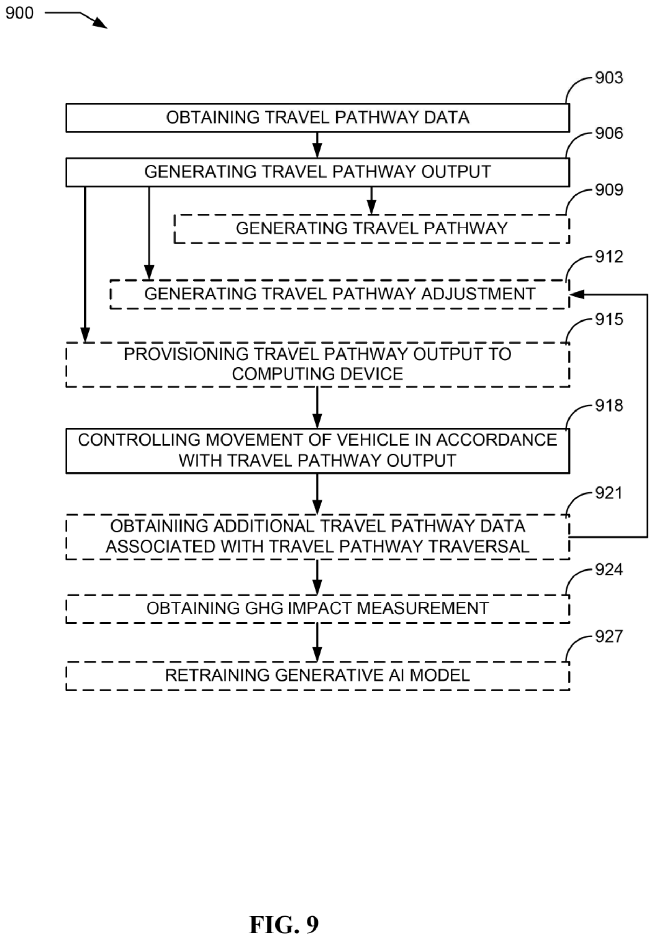

FIG. 9 illustrates a flowchart depicting operations of an example process 900 for performing generative AI-based travel pathway optimization in accordance with at least some example embodiments of the present disclosure. In some embodiments, the process 900 is embodied by computer program code stored on a non-transitory computer-readable storage medium of a computer program product configured for execution to perform the process as depicted and described. Additionally, or alternatively, in some embodiments, the process 900 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicle management systems 102, computing devices 105, external systems 106, and/or the like to perform one or more operations of the process 900.

At operation 903, the apparatus 200 includes means such as the model circuitry 209, the navigation control circuitry 211, the communications circuitry 205, the input/output circuitry 207, the processor 201, and/or the like, or a combination thereof, that obtain travel pathway data. For example, the apparatus 200 may obtain travel pathway data 111 from one or more data stores 107, computing devices 105, vehicle management systems 102, external systems 106, and/or the like. In various embodiments, the travel pathway data 111 includes historical environmental data, current environmental data, and/or forecasted environmental data associated with respective portions of the travel pathway. For example, the travel pathway data 111 may include historical and current weather conditions, vehicle traffic densities, emissions patterns, photosynthetic activity, industrial output, atmospheric conditions, GHG absorption, and/or the like along one or more portions of the travel pathway.

In some embodiments, the historical environmental data and current environmental data include respective atmospheric concentrations of one or more GHG along portions of the travel pathway. For example, the historical environmental data and current environmental data include respective atmospheric concentrations of carbon dioxide along a plurality of portions of the travel pathway (e.g., including different geographical regions, altitudes, and/or the like). Additionally, in some embodiments, the apparatus 200 obtains vehicle data 109, fuel availability parameters 113, and/or the like. For example, the apparatus 200 obtains engine data 301, fueling data 303, position data 305, and/or the like associated with the vehicle 101. As another example, the apparatus 200 may obtain available fuel volumes 319, fuel costs 321, and emission factors 323 of one or more fuel types consumed by the vehicle 101. As another example, the apparatus 200 may obtain efficiency targets, safety factors, and/or the like. As another example, the apparatus 200 may obtain respective estimates of fuel required to traverse the plurality of travel pathway candidates.

In some embodiments, the historical environmental data is associated with a historical time interval pursuant to a time interval in which traversal of the travel pathway is scheduled to occur. The traversal of the travel pathway may be scheduled to occur in summer, and, accordingly, the obtained historical environmental data and current environmental data may be associated with the summer season and a geographic region comprising origin and one or more destinations. For example, the historical environmental data may comprise historical GHG emission data pursuant to the interval of scheduled travel (e.g., season, month, and/or the like) and in accordance with a plurality of travel pathway candidates (e.g., routes for traversing between two or more locations). As another example, the historical environmental data may comprise historical atmospheric GHG concentrations pursuant to the season and in accordance with the plurality of travel pathway candidates. In such contexts, the forecasted environmental data may comprise one or more predicted atmospheric GHG concentrations in accordance with the plurality of travel pathway candidates.

At operation 906, the apparatus 200 includes means such as the model circuitry 209, the navigation control circuitry 211, the communications circuitry 205, the input/output circuitry 207, the processor 201, and/or the like, or a combination thereof, that generate, via a generative AI model, one or more travel pathway outputs based at least in part on the travel pathway data. For example, the apparatus 200 may generate a travel pathway output 121 via a generative AI model 117. In various embodiments, the generative AI model 117 generates the travel pathway output 121 based at least in part on the travel pathway data 111 including current and historical environmental data. In some embodiments, the generative AI model 117 generates the travel pathway output 121 further based at least in part on vehicle data 109, fuel availability parameters 113, and/or the like. In some embodiments, the generative AI model 117 generates the travel pathway output 121 prior to traversal of the vehicle 101 along the travel pathway. In some embodiments, the generative AI model 117 generates the travel pathway output 121 in substantially real-time as the vehicle 101 traverses the travel pathway. For example, the apparatus 200 may obtain one or more changes to current environmental data, fuel availability parameters, and/or the like as the vehicle 101 traverses the travel pathway. In response, the generative AI model 117 may generate one or more travel pathway outputs 121 based at least in part on the obtained changes.

In various embodiments, the travel pathway output 121 is configured to reduce GHG emissions of the vehicle 101 along one or more portions of the travel pathway while maintaining vehicle efficiency and safety within predetermined ranges. For example, the travel pathway output 121 may be configured to minimize GHG emission of the vehicle 101 in accordance with one or more emissions thresholds. The minimization of GHG emission may be further subject to constraints of vehicle safety, vehicle efficiency, target travel time, and/or the like. Additionally, or alternatively, in some embodiments, the travel pathway output 121 is configured to reduce GHG emissions of the vehicle 101 in one or more portions of the travel pathway to maintain atmospheric GHG concentration in the portion within a predetermined range. For example, the travel pathway output 121 may be configured to reduce emissions of the vehicle 101 along a portion of the travel pathway to maintain the current carbon dioxide concentration in the portion within a predetermined range.

In various embodiments, the generative AI model 117 generates the travel pathway output 121 in accordance with the model architecture 400 shown in FIG. 4 or model architecture 600 shown in FIGS. 4 and 6, respectively, and described herein. For example, the generative AI model 117 may generate one or more travel pathways, travel pathway adjustments, and/or the like. A reward function of the generative AI model 117 may be based at least in part on a negative summation of the GHG impact prediction 119 and an estimated efficiency of the vehicle 101 pursuant to moving in accordance with the travel pathway output 121. In some embodiments, the generative AI model 117 is configured to determine an optimal travel pathway output 121 from a plurality of candidate travel pathway outputs based at least in part on a policy. In various embodiments, the apparatus 200 performs one or reinforcement learning techniques (e.g., Q-learning, DQN, PPO, and/or the like) to generate an optimal iteration of the policy that is configured to maximize the reward function of the generative AI model (e.g., minimizing GHG impact of the vehicle 101 and optimizing for vehicle efficiency and safety). In various embodiments, in generating the travel pathway output 121, the apparatus 200 performs functions in accordance with operations 909, 912, and/or the like, to generate travel pathways, travel pathway adjustments, and/or the like, configured to control movement of the vehicle 101 to minimize GHG impact as the vehicle 101 traverses between an origin and a destination.

At operation 909, the apparatus 200 optionally includes means such as the model circuitry 209, the navigation control circuitry 211, the communications circuitry 205, the input/output circuitry 207, the processor 201, and/or the like, or a combination thereof, that generate a travel pathway for the vehicle based at least in part on the travel pathway data and a plurality of travel pathway candidates for traversing between an origin and a destination. For example, the apparatus 200 may obtain or generate a plurality of travel pathway candidates and obtain respective travel pathway data 111 associated with the travel pathway candidates. Additionally, the apparatus 200 may obtain vehicle data 109, fuel availability parameters 113, and/or the like that are associated with one or more travel pathway candidates. The generative AI model 117 may a travel pathway 327 configured to optimize the GHG impact and efficiency of the vehicle 101 as the vehicle 101 traverses from an origin to a destination.

In some embodiments, the generative AI model 117 is configured to generate a respective GHG impact prediction 119 for the plurality of travel pathway candidates. For example, the generative AI model 117 may predict respective total emissions of the vehicle 101 pursuant to the plurality of travel pathway candidates. As another example, the generative AI model 117 may predict respective changes to atmospheric GHG concentration in accordance with the plurality of travel pathway candidates. In some embodiments, the generative AI model 117 is configured to generate a plurality of condition scenarios that may occur along the travel pathway or portion thereof. In some embodiments, the generative AI model 117 is configured to generate a respective set of GHG impact permutations pursuant to the plurality of condition scenarios and the plurality of travel pathway candidates). For example, for a respective travel pathway candidate, the generative AI model 117 may generate a respective GHG impact prediction 119 based on the various condition scenarios. In such contexts, the GHG impact predictions 119 may be referred to as a set of GHG impact permutations for the respective travel pathway candidate. In some embodiments, the generative AI model 117 is configured to determine, as the travel pathway, one of the plurality of travel pathway candidates that is associated with a minimal set of GHG impact permutations. In this manner, the generative AI model 117 may generate a travel pathway that is across all condition scenarios for the season or other time interval in which the travel is scheduled to occur, or a subset of condition scenarios most likely to occur during traversal of the travel pathway during the season.

At operation 912, the apparatus 200 optionally includes means such as the model circuitry 209, the navigation control circuitry 211, the communications circuitry 205, the input/output circuitry 207, the processor 201, and/or the like, or a combination thereof, that generate one or more travel pathway adjustments via the generative AI model. For example, the apparatus 200 may generate one or more travel pathway adjustments 329 via the generative AI model 117. The travel pathway adjustment 329 may be configured to dynamically adjust one or more aspects of vehicle movement to minimize the GHG impact of the vehicle 101 along one or more travel pathway portions. In some embodiments, the travel pathway adjustment 329 is configured to reroute movement of the vehicle around a geographical region comprising a threshold-satisfying atmospheric GHG concentration. In some embodiments, the travel pathway adjustment 329 is configured to adjust an altitude of the vehicle 101 to avoid traversal of the vehicle 101 through a geographic region. In some embodiments, the travel pathway adjustment is configured to reduce a movement speed of the vehicle 101 as the vehicle 101 traverses a portion of the travel pathway.

In some embodiments, the generative AI model 117 is configured to generate respective GHG impact predictions 119 pursuant to a plurality of candidate travel pathway adjustments. Further, the generative AI model 117 may generate sets of GHG impact permutations for respective candidate travel pathway adjustments in accordance with an updated condition scenario occurring in real-time and/or various forecasted condition scenarios. The generative AI model 117 may determine as the travel pathway adjustment one of the plurality of candidate travel pathway adjustments that is associated with a minimum GHG impact prediction or set of GHG impact permutations. In various embodiments, operation 912 is performed following the obtaining of additional travel pathway data in accordance with operation 921. For example, the generative AI model may generate a travel pathway adjustment 329 in response to obtaining environmental data that indicates an atmospheric GHG concentration in a geographic region comprising an upcoming portion of the travel pathway satisfies a predetermined threshold.

At operation 915, the apparatus 200 optionally includes means such as the model circuitry 209, the navigation control circuitry 211, the communications circuitry 205, the input/output circuitry 207, the processor 201, and/or the like, or a combination thereof, that provision the travel pathway output to one or more computing devices. For example, the apparatus 200 may provision the travel pathway output 121 to a computing device 105. In some embodiments, the computing device 105 is associated with an owner of the vehicle 101. In this manner, the apparatus 200 may provision the travel pathway output 121 to the computing device 105 to cause the vehicle owner to review and approve the travel pathway output 121. For example, the apparatus 200 may cause rendering of a GUI on the display of the computing device 105. The GUI may comprise one or more travel pathways 327 such that the vehicle owner may access, view, and/or approve the travel pathway 327 pursuant to the scheduled date of travel. In some embodiments, the computing device is associated with a vehicle management system 102. For example, the apparatus 200 may provision the travel pathway output 121 to a computing device accessible to a vehicle operator to enable the vehicle operator to access, view, and/or approve implementation of the travel pathway output 121.

At operation 918, the apparatus 200 includes means such as the model circuitry 209, the navigation control circuitry 211, the communications circuitry 205, the input/output circuitry 207, the processor 201, and/or the like, or a combination thereof, that control movement of the vehicle 101 in accordance with the travel pathway output. For example, the apparatus 200 may control movement of the vehicle 101 in accordance with one or more travel pathway outputs 121. In some embodiments, the apparatus 200 causes the vehicle 101 to traverse between two or more locations in accordance with a travel pathway 327. Additionally, or alternatively, in some embodiments, the apparatus 200 modifies the travel pathway 327 based at least in part on one or more travel pathway adjustments 329. The apparatus 200 may control movement of the vehicle 101 in accordance with the modified travel pathway 327. In various embodiments, the apparatus 200 causes the vehicle 101 to move in accordance with the travel pathway by provisioning the travel pathway, travel pathway adjustment, modified travel pathway, and/or the like, to a vehicle management system 102 or other computing device accessible to a vehicle operator.

At operation 921, the apparatus 200 optionally includes means such as the model circuitry 209, the navigation control circuitry 211, the communications circuitry 205, the input/output circuitry 207, the processor 201, and/or the like, or a combination thereof, that obtain additional travel pathway data as the vehicle traverses the travel pathway. For example, the apparatus 200 may obtain additional travel pathway data 111 in real-time as the vehicle 101 traverses between locations in accordance with a travel pathway 327. In some embodiments, the additional travel pathway data 111 includes current environmental data 307. For example, the additional travel pathway data 111 may include updated values for current atmospheric GHG concentrations, updated weather reports, updated vehicle traffic information, and/or the like. In some embodiments, the additional travel pathway data 111 includes current turbulence conditions including respective EDRs along portions of the travel pathway. In various embodiments, the process 900 may proceed to operation 912 in response to the apparatus 200 obtaining additional travel pathway data 111. In this manner, the travel pathway may be dynamically adjusted in real-time to optimize GHG impact, efficiency, and safety of the vehicle in accordance with a current condition scenario.

At operation 924, the apparatus 200 optionally includes means such as the model circuitry 209, the navigation control circuitry 211, the communications circuitry 205, the input/output circuitry 207, the processor 201, and/or the like, or a combination thereof, that obtain one or more GHG impact measurements associated with the traversal of the vehicle 101 along one or more portions of the travel pathway. For example, the apparatus 200 may obtain from the vehicle management system 102, external systems 106, and/or the like, one or more GHG impact measurements indicative of GHG emissions, changes to atmospheric GHG concentration, and/or the like, within portions of the travel pathway, or over the entire travel pathway. In some embodiments, the apparatus 200 compares the measured GHG impacts to GHG impact predictions 119 generated by the generative AI model 117. For example, the apparatus 200 may generate respective measures of difference between the predicted and measured GHG impacts.

At operation 927, the apparatus 200 optionally includes means such as the model circuitry 209, the navigation control circuitry 211, the communications circuitry 205, the input/output circuitry 207, the processor 201, and/or the like, or a combination thereof, that retrain the generative AI model based at least in part on the one or more measurements of GHG impact. For example, the apparatus 200 may retrain the generative AI model 117 based at least in part on respective differences between GHG impact predictions 119 and measured GHG impacts. In doing so, the apparatus 200 may improve accuracy of the generative AI model 117 and further enhance travel pathway optimization strategies generated by the model.

Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus.

Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

**1.** A method for reducing greenhouse emission impacts of travel pathways, comprising:

obtaining travel pathway data for a vehicle, the travel pathway data comprising environmental data in accordance with a plurality of travel pathway candidates for traversing between an origin and a destination;
generating a travel pathway for the vehicle via a generative artificial intelligence (AI) model and based at least in part on the travel pathway data and the plurality of travel pathway candidates, wherein:

a reward function of the generative AI model is based at least in part on a negative weighted summation of at least one greenhouse emission estimate and an estimated efficiency of the vehicle pursuant to a respective travel pathway candidate; and
the travel pathway is configured to optimize GHG impact and efficiency of the vehicle as the vehicle traverses from the origin to the destination; and

causing the vehicle to traverse from the origin to the destination in accordance with the travel pathway.

2. The method of claim 1, wherein:

   the travel pathway data comprises a travel date; and
   the environmental data comprises historical environmental data and forecasted environmental data are associated with a season comprising the travel date.

3. The method of claim 2, wherein:
   the historical environmental data comprises historical photosynthetic activity pursuant to the season and in accordance with the plurality of travel pathway candidates.

4. The method of claim 2, wherein:
   the historical environmental data comprises historical GHG absorption pursuant to the season and in accordance with the plurality of travel pathway candidates.

5. The method of claim 2, wherein:
   the historical environmental data comprises historical GHG emission data pursuant to the season and in accordance with the plurality of travel pathway candidates.

6. The method of claim 2, wherein:

   the historical environmental data comprises historical GHG concentrations pursuant to the season and in accordance with the plurality of travel pathway candidates; and
   the forecasted environmental data comprises at least one GHG concentration prediction pursuant to the season and in accordance with the plurality of travel pathway candidates.

7. The method of claim 2, wherein:

   the historical environmental data comprises historical weather conditions pursuant to the season and in accordance with the plurality of travel pathway candidates; and
   the forecasted environmental data comprises at least one weather condition forecast pursuant to the season and in accordance with the plurality of travel pathway candidates.

8. The method of claim 2, wherein:

   the historical environmental data comprises historical vehicle traffic pursuant to the season and in accordance with the plurality of travel pathway candidates; and
   the forecasted environmental data comprises at least one vehicle traffic prediction pursuant to the season and in accordance with the plurality of travel pathway candidates.

9. The method of claim 1, further comprising:

   obtaining additional travel pathway data in real-time as the vehicle traverses the travel pathway, wherein:

   the additional travel pathway data is associated with at least a portion of the travel pathway and a respective geographic region comprising the at least a portion of the travel pathway; and
   an atmospheric GHG concentration within the respective geographic region satisfies a predetermined threshold;

   generating, via the generative AI model, at least one travel pathway adjustment based at least in part on the additional travel pathway data;
   modifying the travel pathway based at least in part on the at least one travel pathway adjustment, wherein:
   the at least one travel pathway adjustment is configured to reduce a GHG impact of the vehicle pursuant to the respective geographic region; and
   causing the vehicle to move in accordance with the modified travel pathway.

10. The method of claim 9, further comprising:

    generating a plurality of candidate travel pathway adjustments based at least in part on the additional travel pathway data;

predicting a respective value of a cumulative reward function for the plurality of candidate travel pathway adjustments; and

determining, via at least one reinforcement learning operation, the at least one travel pathway adjustment based at least in part on the plurality of candidate travel pathway adjustments and the respective values of the cumulative reward function.

11. The method of claim 10, wherein:

the cumulative reward function is based at least in part on a negative weighted summation of at least one greenhouse emission estimate and an estimated efficiency of the vehicle pursuant to a respective candidate travel pathway adjustment.

12. An apparatus comprising at least one processor and at least one non-transitory memory having computer-coded instructions stored thereon that, in execution with at least one processor, cause the apparatus to:

obtain travel pathway data for a vehicle, the travel pathway data comprising environmental data in accordance with a plurality of travel pathway candidates for traversing between an origin and a destination;

generate a travel pathway for the vehicle via a generative AI model and based at least in part on the travel pathway data and the plurality of travel pathway candidates, wherein:

a reward function of the generative AI model is based at least in part on a negative weighted summation of at least one greenhouse emission estimate and an estimated efficiency of the vehicle pursuant to a respective travel pathway candidate; and

the travel pathway is configured to optimize GHG impact and efficiency of the vehicle as the vehicle traverses from the origin to the destination; and

cause the vehicle to traverse from the origin to the destination in accordance with the travel pathway.

13. The apparatus of claim 12, wherein:

the generative AI model is configured to map the travel pathway data to the plurality of travel pathway candidates based at least in part on a policy; and

the instructions, in execution with that at least one processor, further cause the apparatus to:

perform at least one reinforcement learning operation to generate an optimal iteration of the policy, the optimal iteration of the policy being configured to maximize the reward function of the generative AI model.

14. The apparatus of claim 12, wherein:

the instructions, in execution with the at least one processor, further cause the apparatus to:

generate a plurality of travel pathways for the vehicle via a generative AI model and based at least in part on the travel pathway data and the plurality of travel pathway candidates; and

individual ones of the plurality of travel pathways are configured to optimize the GHG impact and efficiency of the vehicle in accordance with different time intervals.

15. A computer program product comprising at least one non-transitory computer-readable storage medium having computer program code stored thereon that, in execution with at least one processor, is configured to:

obtain travel pathway data for a vehicle, the travel pathway data comprising environmental data in accordance with a plurality of travel pathway candidates for traversing between an origin and a destination;

generate a travel pathway for the vehicle via a generative AI model and based at least in part on the travel pathway data and the plurality of travel pathway candidates, wherein:

a reward function of the generative AI model is based at least in part on a negative weighted summation of at least one greenhouse emission estimate and an estimated efficiency of the vehicle pursuant to a respective travel pathway candidate; and

the travel pathway is configured to optimize GHG impact and efficiency of the vehicle as the vehicle traverses from the origin to the destination; and

cause the vehicle to traverse from the origin to the destination in accordance with the travel pathway.

**FIG. 1**

MEMORY 203

MODEL CIRCUITRY 209

PROCESSOR 201

INPUT/OUTPUT
CIRCUITRY 207

NAVIGATION CONTROL
CIRCUITRY 211

COMMUNICATIONS
CIRCUITRY 205

**FIG. 2**

EP 4 768 862 A1

EP 4 768 862 A1

300

VEHICLE DATA 109
ENGINE DATA 301
FUELING DATA 303
POSITION DATA 305

FUEL AVAILABILITY PARAMETERS 113
AVAILABLE FUEL VOLUME 319
FUEL COST 321
EMISSION FACTOR 323

MODEL DATA 115
GENERATIVE AI MODEL 117
PARAMETERS 325
GHG IMPACT PREDICTION 119
TRAVEL PATHWAY OUTPUT 121
TRAVEL PATHWAY 327
TRAVEL PATHWAY ADJUSTMENT 329

TRAVEL PATHWAY DATA 111
ENVIRONMENTAL DATA 307
VEHICLE TRAFFIC DATA 309
TRAVEL INTERVAL 311
FUEL REQUIREMENTS 313
EFFICIENCY THRESHOLDS 315
EMISSION THRESHOLDS 317

**FIG. 3**

**FIG. 4**

EP 4 768 862 A1

FIG. 5

600

```
                    ENVIRONMENTAL                      VEHICLE DATA 109
                    DATA 307
```

| TRAVEL PATHWAY DATA 111 | → | GENERATIVE AI MODEL 117 | ← | VEHICLE TRAFFIC DATA 309 |

| Travel Pathway Adjustments | ΔFuel (pounds) | ΔDistance to Destination (nautical miles) | GH Impact Reduction |
|---|---|---|---|
| 1 | 220 | 35 | 20% |
| 2 | 275 | 45 | 22% |
| 3 | 300 | 60 | 35% |
| 4 | 350 | 70 | 40% |

329A
329B
329C
329D

603          605          601

**FIG. 6**

**FIG. 7**

**FIG. 8**

900

903
OBTAINING TRAVEL PATHWAY DATA

906
GENERATING TRAVEL PATHWAY OUTPUT

909
GENERATING TRAVEL PATHWAY

912
GENERATING TRAVEL PATHWAY ADJUSTMENT

915
PROVISIONING TRAVEL PATHWAY OUTPUT TO COMPUTING DEVICE

918
CONTROLLING MOVEMENT OF VEHICLE IN ACCORDANCE WITH TRAVEL PATHWAY OUTPUT

921
OBTAINIING ADDITIONAL TRAVEL PATHWAY DATA ASSOCIATED WITH TRAVEL PATHWAY TRAVERSAL

924
OBTAINING GHG IMPACT MEASUREMENT

927
RETRAINING GENERATIVE AI MODEL

**FIG. 9**

# EUROPEAN SEARCH REPORT

**Application Number**

EP 25 22 1855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/191015 A1 (RYCHLAK STEFAN [DE] ET AL) 4 August 2011 (2011-08-04) * paragraphs [0001] - [0009], [0016] * | 1,4-7, 12-15 | INV. G01C21/20 G01C21/34 |
| Y | US 2024/025453 A1 (KUNDU SUBRATA KUMAR [US]) 25 January 2024 (2024-01-25) * paragraphs [0031], [0034], [0083], [0134] * | 1,4-7, 12-15 | |
| X | HAMMOUDA LAILA ET AL: "Quantifying Real-time Pollution Impact of Vehicle Rerouting on Initial Pollution Levels", 2023 ELEVENTH INTERNATIONAL CONFERENCE ON INTELLIGENT COMPUTING AND INFORMATION SYSTEMS (ICICIS) IEEE, 21 November 2023 (2023-11-21), pages 298-305, XP034519569, DOI: 10.1109/ICICIS58388.2023.10391120 ISBN: 9798350322088 [retrieved on 2024-01-19] * pages 299-302 * * page 305 * | 1-12,15 | |
| X | WO 2024/061692 A1 (CETASOL AB [SE]) 28 March 2024 (2024-03-28) * pages 2,3,4,5, * | 1,12,15 | TECHNICAL FIELDS SEARCHED (IPC) G01C B60W B63H |

The present search report has been drawn up for all claims

| Place of search | Date of completion of the search | Examiner |
|---|---|---|
| The Hague | 30 April 2026 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1855

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2026

| Patent document cited in search report | | Publication date | Patent family member(s) | | Publication date |
|---|---|---|---|---|---|
| US 2011191015 | A1 | 04-08-2011 | CN | 102077055 A | 25-05-2011 |
| | | | DE | 102008002695 A1 | 31-12-2009 |
| | | | EP | 2294361 A1 | 16-03-2011 |
| | | | US | 2011191015 A1 | 04-08-2011 |
| | | | WO | 2009156220 A1 | 30-12-2009 |
| US 2024025453 | A1 | 25-01-2024 | CN | 117419735 A | 19-01-2024 |
| | | | JP | 7598978 B2 | 12-12-2024 |
| | | | JP | 2024013227 A | 31-01-2024 |
| | | | US | 2024025453 A1 | 25-01-2024 |
| WO 2024061692 | A1 | 28-03-2024 | EP | 4590580 A1 | 30-07-2025 |
| | | | SE | 2230298 A1 | 21-03-2024 |
| | | | WO | 2024061692 A1 | 28-03-2024 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202411103318